# EUROPEAN PATENT SPECIFICATION

(11) **EP 4 395 000 B1**
(45) Date of publication and mention of the grant of the patent: **03.06.2026**
(21) Application number: 21958621.1
(22) Date of filing: 28.09.2021
(51) Int. Cl.: H01M 10/48, H01M 50/502, H01M 50/204, H01M 50/209, H01M 50/244, H01M 50/503, H01M 50/569, H01M 50/213, H01M 50/507

(54) **BATTERY AND ELECTRICAL APPARATUS**
BATTERIE UND ELEKTRISCHE VORRICHTUNG
BATTERIE ET DISPOSITIF ÉLECTRIQUE

(43) Date of publication of application: 03.07.2024
(73) Proprietor: Contemporary Amperex Technology (Hong Kong) Limited, Central, Central And Western District (HK)
(72) Inventor: JI, Hongye, Ningde, Fujian 352100 (CN); LIU, Shaozhong, Ningde, Fujian 352100 (CN); QIN, Feng, Ningde, Fujian 352100 (CN); WANG, Zhi, Ningde, Fujian 352100 (CN)
(74) Representative: Jacob, Reuben Ellis
(86) International application number: PCT/CN2021/121141
(87) International publication number: WO 2023/050022

(56) References cited:
- EP-A1- 3 128 599
- EP-A1- 3 217 452
- CN-A- 103 715 473
- CN-A- 113 325 322
- CN-U- 206 742 445
- CN-U- 208 939 116
- JP-A- 2013 054 996
- US-A1- 2007 132 429
- US-A1- 2011 177 368

## Description

### TECHNICAL FIELD

This application relates to the field of battery technologies, and in particular, to a battery, a manufacturing method and a manufacturing apparatus thereof, and an electric apparatus.

### BACKGROUND

With the advantages of high energy density, high power density, long cycle life, long storage time, and the like, lithium-ion batteries have been widely used in electric vehicles.

However, how operating reliability of electric vehicle batteries is improved remains a difficult problem in the industry.

### SUMMARY

This application is intended to improve operating reliability of batteries.

According to a first aspect of this application, a battery is provided, including:
a plurality of battery units arranged side by side along a first direction, where each battery unit includes at least two battery cells arranged along a second direction, the battery cell includes a body portion, a gap is formed between the body portions of at least one pair of adjacent battery cells in the battery unit, at least one battery cell in the adjacent battery cells includes an electrode terminal protruding from the body portion, and the electrode terminal is located in the gap and configured to be electrically connected to the other battery cell, where the second direction is perpendicular to the first direction; and
a sampling member at least partially located in the gap, where the sampling member includes a sampling portion and a lead-out portion, the sampling portion is electrically connected to the electrode terminal and is configured to collect an electrical signal of the battery cell, a first end of the lead-out portion is electrically connected to the sampling portion, a second end of the lead-out portion is led out from between the adjacent battery units along the first direction, and the lead-out portion is configured to output the collected electrical signal.

In this embodiment of this application, the second end of the lead-out portion is led out from between the adjacent battery units, which can prevent occupation of extra space, increase the extension length of the second end of the lead-out portion, facilitate the electrical connection with a signal output component, and improve the reliability of the electrical connection. This allows for accurate collection of the electrical signals of the battery cells and reliable monitoring of the battery cells to discover abnormal situations, so as to facilitate timely control and handling, and improve the operating reliability of the battery. For example, in welding the second end of the lead-out portion to the signal output component, the welding area can be increased, so as to prevent virtual contact or disconnection of the welding point caused by long-term vibration or impact, thus improving the welding reliability.

Moreover, this arrangement also leaves operation space for the connection between the sampling portion and the electrode terminal, improving the reliability of the electrical connection between the sampling portion and the electrode terminal, facilitating the assembly and optimizing the assembly effect.

In some embodiments, the lead-out portion does not extend beyond an outer side surface of the battery cell in a third direction, where the third direction is perpendicular to the first direction and the second direction.

This embodiment can make the sampling member not extend beyond the outer side surface of the battery cell in the third direction on the basis of increasing the extension length of the second end of the lead-out portion, so that arrangement of the adjacent battery cells is not affected. This can minimize the size occupied by a sampling function related structure in the third direction, thus improving the energy density of the battery.

In some embodiments, in the second direction, the second end of the lead-out portion extends along a direction leaving the electrode terminal.

In this embodiment, the second end of the lead-out portion extends in the second direction, that is, parallel to the side wall of the body portion, which is convenient for increasing the extension length of the second end of the lead-out portion, increasing the size of the lead-out portion along the first direction, and preventing the second end of the lead-out portion from affecting the side wall of the body portion.

In some embodiments, in the second direction, the second end of the lead-out portion extends beyond the gap.

In this embodiment, the second end of the lead-out portion extends beyond the gap, which can increase the extension length of the second end of the lead-out portion, facilitate the electrical connection with the signal output component, and improve the reliability of the electrical connection, so as to accurately collect the electrical signals of the battery cells.

In some embodiments, the first end of the lead-out portion is close to the side end of the sampling portion in the second direction, and in the second direction, the second end of the lead-out portion extends along a direction leaving the sampling portion.

In this embodiment, the first end of the lead-out portion is connected to one end of the sampling portion in the second direction, so that an operation space can be reserved for the connection between the sampling portion and the electrode terminal. Additionally, in the second direction, the second end of the lead-out portion extends along a direction leaving the sampling portion, so that an extension direction of the second end of the lead-out portion is independent of the operation region where the sampling portion and the electrode terminal are connected. This facilitates the connection between the second end of the lead-out portion and the signal output component, as well as the connection between the sampling portion and the electrode terminal, thus facilitating assembly and improving assembly performance. Moreover, in forming the sampling member through a thin plate, such design is also convenient for forming the sampling member by cutting and bending the whole thin plate, with no need to connect the sampling portion and the lead-out portion additionally, thus reducing the manufacturing difficulty of the sampling member.

In some embodiments, the first end of the lead-out portion is connected to a position of the sampling portion in a center of the battery cell along the first direction, and the second end of the lead-out portion extends to a position between the adjacent battery units along the first direction.

In this embodiment, the extension length of the lead-out portion along the first direction can be designed in such a way that the second end of the lead-out portion is located between adjacent battery units, to facilitate control of the lead-out position of the second end of the lead-out portion. Moreover, in order that the first end of the lead-out portion is easily connected to the sampling portion and that the second end of the lead-out portion extends along the first direction, the region of the lead-out portion close to the sampling portion can be designed to form a bending structure in a plane perpendicular to the second direction, thus improving the rigidity of the lead-out portion and preventing the lead-out portion from being deformed after assembly and mounting.

According to the present invention, the sampling member includes a plurality of sampling portions spaced apart along the first direction, and the adjacent sampling portions are connected to each other.

The electrode terminals of the plurality of battery cells that are electrically connected to a plurality of connecting portions of one sampling member can be designed to have an equal potential, thus achieving voltage balance of the battery cells and improving consistency of detection parameters of the plurality of battery cells.

In some embodiments, the plurality of sampling portions share one lead-out portion.

In this embodiment, the plurality of sampling portions are electrically connected, and only one lead-out portion is needed to implement lead-out of electrical signals, thus simplifying the structure and reducing the materials used for the sampling member. Moreover, for the embodiment for arranging a mounting part, most of the lead-out portion can be integrally fastened in the mounting part by injection molding and encapsulation, and the second end of the lead-out portion does not need to be fastened to the mounting part, so there is no need to correspondingly arrange one lead-out portion for each sampling portion, and only one lead-out portion is needed for one sampling member.

According to the present invention, the sampling member further includes a connecting portion, where the connecting portion is connected between adjacent sampling portions, the first end of the lead-out portion is connected at a position of the connecting portion between adjacent battery units, and the second end of the lead-out portion extends in the third direction, the third direction being perpendicular to the first direction and the second direction.

The adjacent sampling portions are electrically connected through the connecting portion, so that the plurality of sampling portions can be connected into a whole. Additionally, the first end of the lead-out portion is directly connected to the position of the connecting portion between the battery units, so that the second end of the lead-out portion can reach the position between the adjacent battery units when the second end of the lead-out portion directly extends in the third direction, thus simplifying the structure of the lead-out portion.

In some embodiments, two ends of the connecting portion are respectively connected to the positions of adjacent sampling portions close to the lead-out portion in the third direction.

This embodiment is beneficial to ensure the relative positions of the sampling portions, so that the sampling portions are aligned with the electrode terminals for connection, preventing the electrode terminals from being subjected to lateral pulling force during mounting of the sampling portions. Moreover, for the structure for arranging the mounting part subsequently, the connecting portion can be encapsulated and molded in the mounting part to implement more reliable fixation between the sampling member and the mounting part, so as to reduce the acting force on the lead-out portion. In addition, this structure can also reduce the overall length of the lead-out portion, which is beneficial to improve the rigidity of the lead-out portion and prevent the lead-out portion from being deformed.

In some embodiments, the sampling portion is of a partially annular structure, and the two ends of the connecting portion are connected to the respective adjacent end portions of the adjacent sampling portions.

In this embodiment, the two ends of the connecting portion are connected to the respective adjacent end portions of adjacent sampling portions, so that when the battery is subjected to vibration or impact, the vibration or impact can be absorbed through the deformation of the connecting portion to prevent the adjacent sampling portions from being disconnected, thus improving the sampling reliability of the battery cells.

In some embodiments, the connecting portion is provided with a deformable section configured to allow dislocation of the adjacent sampling portions.

In this embodiment, when the battery is subjected to vibration or impact, the vibration or impact can be absorbed through the deformation of the deformable section, allowing for a small amount of dislocation of the adjacent sampling portions, preventing the adjacent sampling portions from being disconnected after long-term operation, and improving the sampling reliability of the battery cells.

In some embodiments, a mounting part is further included, which is mounted on the battery cell and connected to the sampling member. An accommodating groove is provided on the mounting part and is configured to accommodate the second end of the lead-out portion, and the accommodating groove is provided on a surface of the mounting part far away from the battery unit in the third direction and is located at a position between adjacent battery units in the first direction; where the third direction is perpendicular to the first direction and the second direction.

In this embodiment, the mounting part is provided to facilitate the connection of the sampling member and position the sampling member relative to the battery cell, thus ensuring the position accuracy of the mounted sampling member and preventing the sampling member from shaking. Moreover, the accommodating groove is provided on the mounting part to accommodate the second end of the lead-out portion, which can protect the second end of the lead-out portion, prevent the second end of the lead-out portion from being deformed due to collision during assembly, and ensure the insulation of the second end of the lead-out portion.

In some embodiments, the mounting part is provided with an opening, the opening is disposed opposite the electrode terminal in the first direction, and the opening is configured to form a channel for connecting the sampling portion and the electrode terminal.

In this embodiment, the opening is provided on the mounting part to provide an operation space for connecting the sampling portion and the electrode terminal, which facilitates assembly of the sampling member and improves the connection reliability between the sampling portion and the electrode terminal. Moreover, the accommodating groove is located on one side of the opening in the second direction, so that the operation space for connecting the sampling portion and the electrode terminal is spatially independent of the second end of the lead-out portion, thus facilitating assembly and improving assembly performance.

In some embodiments, the mounting part has a supporting portion configured to support the second end of the lead-out portion.

In this embodiment, support can be provided for the second end of the lead-out portion when pressure is applied in the third direction to connect the signal output component and the second end of the lead-out portion, so as to prevent the mounting part from being crashed, thus improving the connection reliability between the signal output component and the second end of the lead-out portion and facilitating the application of pressure during assembly.

In some embodiments, the sampling portion is connected to a circumferential side wall of the electrode terminal.

In this embodiment, the sampling portion is connected to the circumferential side wall of the electrode terminal, which can improve the reliability and stability of the connection and keep the contact area between the sampling portion and the electrode terminal stable, thus improving the accuracy of the sampling results.

In some embodiments, the electrode terminals of at least one pair of adjacent battery cells in the battery unit are interconnected in the second direction, and the sampling portion is electrically connected to the two electrode terminals.

In this embodiment, the size of the sampling portion in the second direction can be increased, improving the connection stability between the sampling portion and the electrode terminal.

In some embodiments, the sampling portion is of a partially annular structure, and the sampling portion is in interference fit with the electrode terminal.

The mounting manner of this embodiment makes the sampling member easy to assemble and mount, and facilitates automation, thus reducing the requirements for the assembly device, improving assembly efficiency, and reducing costs.

In some embodiments, the sampling portion is of a partially annular structure and is laser-welded to the electrode terminal.

The mounting manner of this embodiment can lower the dimensional matching requirement between the sampling portion and the electrode terminal, and implement sound and reliable connection between the sampling portion and the electrode terminal, so that the resistance value is stable after connection, thus improving the accuracy and stability of the voltage signal collection results.

In some embodiments, a protruding portion is provided on an inner wall of the sampling portion, and the protruding portion is in contact with the circumferential side wall of the electrode terminal.

In this embodiment, the protruding portion is provided on the inner wall of the sampling portion, which can increase the clamping force between the sampling portion and the electrode terminal, and improve the connection reliability and firmness, making the signal collection results more stable.

In some embodiments, the sampling portion includes a first snap ring and a second snap ring, and the first snap ring and the second snap ring together surround the circumferential side wall of the electrode terminal.

In this embodiment, the first snap ring and the second snap ring surround the entire circumferential side wall of the electrode terminal, so that the connection is reliable, improving the sampling accuracy.

In some embodiments, the sampling member further includes an elastic conductive layer disposed on an inner wall of at least one of the first snap ring and the second snap ring.

In this embodiment, the elastic conductive layer is disposed to increase the clamping force applied by the sampling member to the electrode terminal, prevent the electrode terminal from being damaged by hard contact between the sampling member and the electrode terminal, and lower the dimensional machining accuracy requirement on the first snap ring and the second snap ring.

According to a second aspect of this application, an electric apparatus is provided, including the battery according to the foregoing embodiments, where the battery is configured to provide electrical energy for the electric apparatus.

According to a third aspect of this application, a manufacturing method of a battery is provided, including:
arranging a plurality of battery units side by side along a first direction, where each battery unit includes at least two battery cells arranged along a second direction, the battery cell includes a body portion, a gap is formed between the body portions of at least one pair of adjacent battery cells in the battery unit, at least one battery cell in the adjacent battery cells includes an electrode terminal protruding from the body portion, and the electrode terminal is located in the gap and configured to be electrically connected to the other battery cell; where the second direction is perpendicular to the first direction; and
disposing at least part of a sampling member in the gap, electrically connecting a sampling portion of the sampling member to the electrode terminal to collect an electrical signal of the battery cell, electrically connecting a first end of a lead-out portion of the sampling member to the sampling portion, and leading out a second end of the lead-out portion from between the adjacent battery units in the first direction to output the collected electrical signal.

According to a fourth aspect of this application, a manufacturing apparatus of a battery is provided, including:
a battery assembly device, configured to arrange a plurality of battery units side by side along a first direction, where each battery unit includes at least two battery cells arranged along a second direction, the battery cell includes a body portion, a gap is formed between the body portions of at least one pair of adjacent battery cells in the battery unit, at least one battery cell in the adjacent battery cells includes an electrode terminal protruding from the body portion, and the electrode terminal is located in the gap and configured to be electrically connected to the other battery cell; where the second direction is perpendicular to the first direction; and
a sampling member mounting device, configured to dispose at least part of a sampling member in the gap, electrically connect a sampling portion of the sampling member to the electrode terminal to collect an electrical signal of the battery cell, electrically connect a first end of a lead-out portion of the sampling member to the sampling portion, and lead out a second end of the lead-out portion from between the adjacent battery units in the first direction to output the collected electrical signal.

### BRIEF DESCRIPTION OF DRAWINGS

To describe the technical solutions of the embodiments of this application more clearly, the following briefly describes the accompanying drawings required for describing the embodiments of this application.
FIG. 1 is a schematic structural diagram of some embodiments of a battery installed in a vehicle according to this application.
FIG. 2 is an exploded view of some embodiments of the battery according to this application.
FIG. 3A and FIG. 3B are outline views and exploded views of some embodiments of a battery cell according to this application.
FIG. 4 is a schematic structural diagram of a sampling member mounted on battery cells according to a first embodiment.
FIG. 5 is a top view of FIG. 4.
FIG. 6 is a cross-sectional view of FIG. 5 along A-A.
FIG. 7 is a schematic structural diagram of connection between a sampling member and a mounting part according to the first embodiment.
FIG. 8 is a schematic structural diagram of a mounting part according to the first embodiment.
FIG. 9 is a schematic structural diagram of a sampling member according to the first embodiment.
FIG. 10 is a schematic structural diagram of a sampling member mounted on battery cells according to a second embodiment.
FIG. 11 is a top view of FIG. 10.
FIG. 12 is a cross-sectional view of FIG. 11 along B-B.
FIG. 13 is a schematic structural diagram of connection between a sampling member and a mounting part according to the second embodiment.
FIG. 14 is a schematic structural diagram of a mounting part according to the second embodiment.
FIG. 15 is a schematic structural diagram of a sampling member according to the second embodiment.
FIG. 16 is a schematic structural diagram of a mounting part provided with a supporting portion according to the second embodiment.
FIG. 17 is a schematic structural diagram of a sampling member mounted on battery cells according to a third embodiment.
FIG. 18 is a top view of FIG. 17.
FIG. 19 is a cross-sectional view of FIG. 18 along C-C.
FIG. 20 is a schematic structural diagram of connection between a sampling member and a mounting part according to the third embodiment.
FIG. 21 is a schematic structural diagram of a mounting part according to the third embodiment.
FIG. 22 is a schematic structural diagram of a sampling member according to the third embodiment.
FIG. 23 is a schematic structural diagram of a sampling member mounted on battery cells according to a fourth embodiment.
FIG. 24 is a top view of FIG. 23.
FIG. 25 is a cross-sectional view of FIG. 24 along D-D.
FIG. 26 is a schematic structural diagram of connection between a sampling member and a mounting part according to the fourth embodiment.
FIG. 27 is a schematic structural diagram of a mounting part according to the fourth embodiment.
FIG. 28 is a schematic structural diagram of a sampling member according to the fourth embodiment.
FIG. 29 is a schematic flowchart of some embodiments of a manufacturing method of a battery according to this application.
FIG. 30 is a schematic module composition diagram of some embodiments of a manufacturing apparatus of a battery according to this application.

The accompanying drawings are not drawn to scale.

Reference signs are described as follows:
200. vehicle; 201. axle; 202. wheel; 203. motor; 204. controller;
100. battery; 101. housing assembly; 101A. cover; 101B. box body; 10. battery unit;
1. battery cell; 11. body portion; 12. electrode terminal; 111. housing; 1111. opening; 112. end cover; 113. electrode assembly; 1131. electrode tab; 114. adapter;
2. sampling member; 21. sampling portion; 211. protruding portion; 212. guide portion; 213. stiffener; 214. first snap ring; 215. second snap ring; 216. elastic conductive layer; 217. fastening portion; 22. lead-out portion; 221. bending section; 222. extension section; 223. connecting section; 23. connecting portion; 231. deformable section;
3. mounting part; 31. first portion; 31A. mounting plate; 31B. positioning portion; 311. groove; 312. accommodating groove; 313. opening; 32. second portion; 33. accommodating portion; 34. supporting portion; 341. first plate; 342. second plate;
300. manufacturing apparatus; 310. battery assembly device; 320. sampling member mounting device;
x. first direction; y. second direction; and z. third direction.

### DESCRIPTION OF EMBODIMENTS

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application.

In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error. The orientation terms appearing in the following description all are directions shown in the figures, and do not limit the specific structure of the application.

In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In this specification, reference to "embodiment" means that specific features, structures, or characteristics described with reference to the embodiment may be incorporated in at least some embodiment of this application. The word "embodiment" appearing in various places in the specification does not necessarily refer to the same embodiment or an independent or alternative embodiment that is exclusive of other embodiments. It would be explicitly or implicitly understood by persons skilled in the art that the embodiments described herein may be combined with other embodiments within the scope as defined by the appended claims.

In the description of the embodiments of this application, the term "a plurality of" means more than two (inclusive). Similarly, "a plurality of groups" means more than two (inclusive) groups, and "a plurality of pieces" means more than two (inclusive) pieces.

In this application, the orientations or positional relationships indicated by the terms "upper", "lower", "top", "bottom", "left", "right", "inside", "outside", and the like are merely for ease description of this application rather than indicating or implying that the means mentioned must have specific orientations or must be constructed or manipulated according to particular orientations. These terms shall therefore not be construed as limitations on the protection scope of this application.

The battery mentioned in the embodiments of this application is a single physical module that includes multiple battery cells for providing higher voltage and capacity. For example, the battery mentioned in this application may include a battery module, a battery pack, or the like.

The battery cell mentioned in the embodiments of this application typically includes a housing and an electrode assembly accommodated in the housing, and the housing is filled with electrolyte. The electrode assembly is mainly formed by stacking or winding a first electrode plate and a second electrode plate with opposite polarities, and a separator is typically sandwiched between the first electrode plate and the second electrode plate. The portions of the first electrode plate and the second electrode plate with active substances constitute a body portion of the electrode assembly, and the portions of the first electrode plate and the second electrode plate without active substances respectively constitute a first electrode tab and a second electrode tab. In a lithium ion battery, the first electrode plate may be a positive electrode plate including a positive electrode current collector and positive electrode active substance layers disposed on two sides of the positive electrode current collector. The material of the positive electrode current collector may be, for example, aluminum, and the positive electrode active substance may be, for example, lithium cobaltate, ferrous lithium phosphate, lithium ternary, or lithium manganate. The second electrode plate may be a negative electrode plate, including a negative electrode current collector and negative electrode active substance layers disposed on two sides of the negative electrode current collector. The material of the negative electrode current collector may be, for example, copper, and the negative electrode active substance may be, for example, graphite or silicon. The first electrode tab and the second electrode tab may both be located at one end of the body portion or be located at two ends of the body portion respectively. During charging and discharging of the battery cell, the positive electrode active substance and the negative electrode active substance react with an electrolyte, and the electrode tabs are connected to the terminals to form a current loop.

In practice, the inventors have found that the design of the battery requires consideration of many design factors, for example, performance parameters such as energy density, cycle life, discharge capacity, and charge and discharge rate, as well as safety of the battery.

At present, a battery of an electric vehicle often requires tens or even hundreds of battery cells.

In practical applications, due to minor differences in some parameters (for example, voltage, internal resistance, and SOC (state of charge)) between battery cells, as the use time increases, differences between the battery cells become increasingly large. If these differences are neglected, consistency of the battery cells will be worse, affecting performance of the battery, and causing serious consequences, even causing fires, explosions, and other accidents. To solve this problem, a sampling member can be disposed in the battery to collect the electrical signal of the battery cell, so as to perform corresponding control and handling when abnormality is found.

The battery cell includes a body portion and an electrode terminal disposed on the body portion. For a structure in which two battery cells are interconnected to implement electrical connection, the sampling member needs to be connected to the electrode terminals of the battery cells to collect the electrical signals of the battery cells, and the electrical signals are led out through a lead-out portion. In order not to affect the arrangement of adjacent battery cells, it is necessary to arrange the lead-out portion in a gap formed by the body portions of two battery cells.

To facilitate the welding of the lead-out portion and the signal output component, which is not shown in the figures, the inventors thought of folding the end portion of the lead-out portion so that the folded portion extends in the width direction of the gap. However, considering that the protruding height of the electrode terminal is small and the gap formed is also small, the extension length of the lead-out portion cannot exceed the width of the gap, so the welding area between the end portion of the lead-out portion and the signal output component is small and the contact reliability is poor.

In a case that the battery is subjected to vibration or impact during long-term operation, the solder joint at the connection between the lead-out portion and the signal output component is prone to fall off, which will result in false contact or separation between the lead-out portion and the signal output component, affecting the accuracy of electrical signal collection of the battery cell, or even leading to signal collection failure. In this case, the abnormality of the battery cell may not be detected, and timely control and handling cannot be implemented, affecting the operating reliability of the battery.

In view of the above problems, the inventors believe that if the operation reliability of the battery is to be improved, the connection reliability between the lead-out portion in the sampling member and the signal output component needs to be improved. According to this idea, this application has improved the sampling function in the battery. The following will further describe the embodiments of this application with reference to the accompanying drawings.

The electric apparatus includes a battery for supplying power to an apparatus. The apparatus may be a mobile phone, a portable device, a laptop, an electric scooter, an electric vehicle, a steamship, a spacecraft, an electric toy, an electric tool, or the like. For example, the spacecraft includes an airplane, a rocket, a space shuttle, and a spaceship. The electric toy can include a fixed or mobile electric toy, such as a game console, an electric vehicle toy, an electric ship toy, and an electric airplane toy. The electric tool can include an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer.

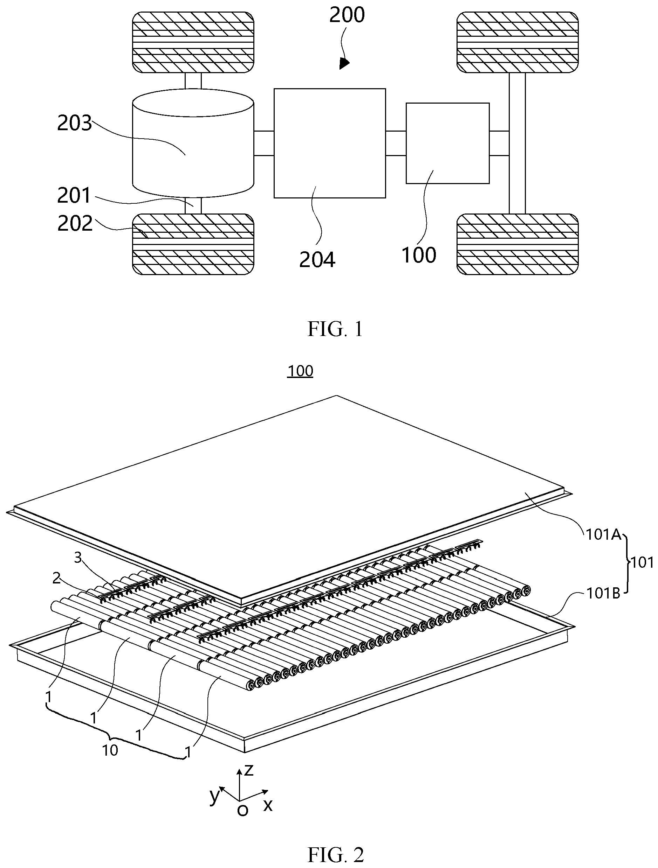

As shown in FIG. 1, the electric apparatus may be a vehicle 200, for example, a new energy vehicle. The new energy vehicle may be a battery electric vehicle, a hybrid electric vehicle, an extended-range electric vehicle, or the like. Alternatively, the electric apparatus may be an unmanned aerial vehicle, a ship, or the like. Specifically, the vehicle 200 may include an axle 201, wheels 202 connected to the axle 201, a motor 203, a controller 204, and a battery 100. The motor 203 is used to drive the axle 201 to rotate, and the controller 204 is used to control the motor 203 to work. The battery 100 may be arranged at the bottom, head, or tail of the vehicle 200 to provide electrical energy for the motor 203 and other components in the vehicle.

As shown in FIG. 2, to meet different power usage requirements, the battery 100 may include a plurality of battery cells 1, where the plurality of battery cells 1 may be connected in series, parallel, or series and parallel, and being connected in series-parallel refers to a combination of series-parallel connections.

FIG. 2 is a schematic structural diagram of some embodiments of the battery 100 according to this application. The battery 100 may include a housing assembly 101 and a plurality of battery units 10. The housing assembly 101 has a hollow structure inside. The plurality of battery cells 1 are accommodated in the housing assembly 101. Each battery unit 10 includes a plurality of battery cells 1 arranged in a second direction y and electrically connected to each other. The plurality of battery units 10 are arranged in a first direction x. The first direction x is perpendicular to the second direction y. That is, the plurality of battery cells 1 in the battery 100 are arranged in a matrix structure. Optionally, the battery 100 may alternatively have only one battery unit 10, and the battery unit 10 includes a plurality of battery cells 1 arranged in the second direction y and electrically connected to each other. The battery 100 may further include at least one sampling member 2 configured to collect an electrical signal of the battery cell 1.

For example, the housing assembly 101 may include two parts, which are referred to as a cover 101A and a box body 101B herein. The cover 101A and the box body 101B are fitted together. Shapes of the cover 101A and the box body 101B may be determined based on a shape in which the plurality of battery cells 1 are combined. For example, the cover 101A and the box body 101B each may be a hollow cuboid and have only one face with an opening, where the opening of the cover 101A is disposed opposite the opening of the box body 101B, and the cover 101A and the box body 101B are snap-fitted to form a box with a closed chamber. Alternatively, the cover 101A is a cuboid with an opening and the box body 101B is in a plate shape, or the box body 101B is a cuboid with an opening and the cover 101A is in a plate shape, and the cover 101A and the box body 101B are disposed opposite each other and snap-fitted to form a box with a closed chamber. The plurality of battery cells 1 are connected in parallel, in series, or in series-parallel, and then placed into the box formed after the cover 101A and the box body 101B are snap-fitted.

The battery cell 1 may be, for example, a lithium-ion secondary battery, a lithium-ion primary battery, a lithium-sulfur battery, a sodium-ion battery, a magnesium-ion battery, or the like.

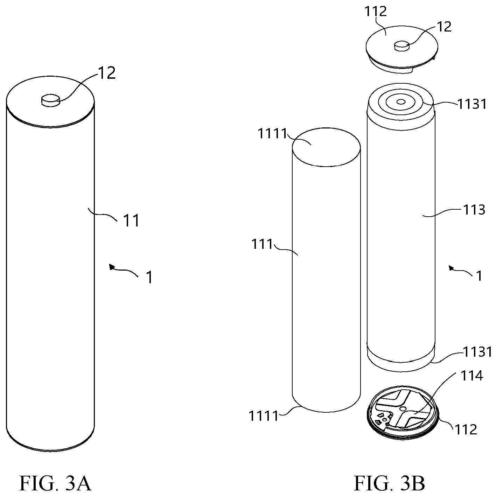

As shown in FIG. 3A, the battery cell 1 includes a body portion 11 and an electrode terminal 12. The electrode terminal 12 is disposed at an end portion of the body portion 11 along the second direction y, for example, may be disposed at one end or both ends.

As shown in FIG. 3B, the body portion 11 includes a housing 111, an end cover 112, and an electrode assembly 113. The housing 111 is a hollow structure for accommodating the electrode assembly 113, and the housing 111 has an opening 1111. For example, the housing 111 may be cylindrical, flat, cuboid, or of other shapes. The electrode terminal 12 is disposed on the end cover 112 and closes the opening 1111 together with the end cover 112.

As shown in FIG. 3B, the electrode assembly 113 is disposed in the housing 111, and the first electrode plate and the second electrode plate with opposite polarities each have an electrode tab 1131, and the electrode tab 1131 of the first electrode plate or the electrode tab 1131 of the second electrode plate is electrically connected to the electrode terminal 12. The battery cell 1 may further include an adapter 114. The adapter 114 is disposed between the end cover 112 and the electrode assembly 113 and configured to implement an electrical connection between the electrode tab 1131 and the electrode terminal 12.

In the embodiment shown in FIG. 3A and FIG. 3B, the housing 111 is a hollow cylinder with openings 1111 at two ends, and each of the two openings 1111 is closed by the end cover 112 and the electrode terminal 12 provided on the end cover 112. The electrode assembly 113 may be placed into the housing 111 from the opening 1111. The first electrode plate and the second electrode plate are wound to form a cylindrical electrode assembly 113. The respective electrode tabs 1131 of the first electrode plate and the second electrode plate are led out from two ends of the electrode assembly 113 along an axial direction, and are electrically connected to the electrode terminals 12 at the corresponding ends through the adapter 114.

In other optional embodiments, the housing 111 of the battery cell 1 is a hollow cylinder with one end closed and the other end having an opening 1111 closed by the end cover 112. The first electrode plate and the second electrode plate are wound to form a cylindrical electrode assembly 113. The respective electrode tabs 1131 of the first electrode plate and the second electrode plate are respectively led out from two ends of the electrode assembly 113 along an axial direction. The electrode tab 1131 of the first electrode plate, for example, a negative electrode plate, is electrically connected to the electrode terminal 12 through the adapter 114. The electrode tab 1131 of the second electrode plate, for example, a positive electrode plate, is directly electrically connected to an end wall of the housing 111.

The basic structures of the battery 100 and the battery cell 1 have been described. The following will describe the structures related to the sampling function in the battery 100.

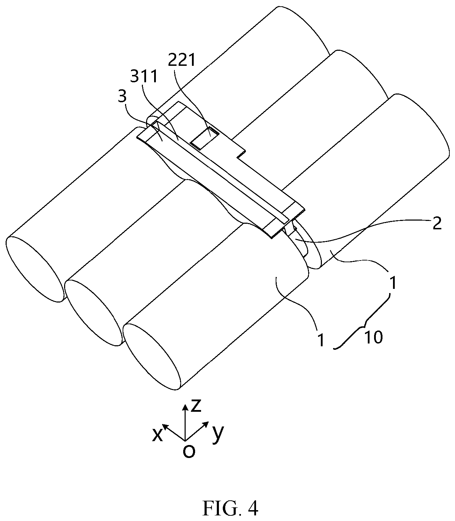

In some embodiments, as shown in FIG. 4 to FIG. 9, the battery 100 includes a sampling member 2 and a plurality of battery units 10.

A plurality of battery units 10 are arranged side by side along a first direction x, where each battery unit 10 includes at least two battery cells 1 arranged along a second direction y, the battery cell 1 includes a body portion 11, a gap is formed between the body portions 11 of at least one pair of adjacent battery cells 1 in the battery unit 10, at least one battery cell 1 in the adjacent battery cells 1 includes an electrode terminal 12 protruding from the body portion 11 along the second direction y, and the electrode terminal 12 is located in the gap and configured to be electrically connected to the other battery cell 1; where the second direction y is perpendicular to the first direction x.

The sampling member 2 is at least partially located in the gap. The sampling member 2 includes a sampling portion 21 and a lead-out portion 22. The sampling portion 21 is electrically connected to the electrode terminal 12 and is configured to collect an electrical signal of the battery cell 1. A first end of the lead-out portion 22 is electrically connected to the sampling portion 21, a second end of the lead-out portion 22 is led out from between the adjacent battery units 10 along the first direction x, and the lead-out portion 22 is configured to output the collected electrical signal.

The adjacent battery cells 1 in the battery unit 10 are electrically connected through interconnection, so that the two battery cells 1 can be connected in series.

For example, for the battery cells 1 with the electrode terminals 12 disposed respectively at two ends of the body portions 11, adjacent battery cells 1 may be connected in series by interconnecting the electrode terminals 12, and at least two battery cells 1 in the battery unit 10 may be connected in series by sequentially interconnecting the electrode terminals 12 along the second direction y. If the electrode terminals 12 of adjacent battery cells 1 all protrude from the body portion 11, the size of the gap along the second direction y is a sum of the heights at which the electrode terminals 12 of the adjacent battery cells 1 protrude from the body portion 11. If only one electrode terminal 12 of adjacent battery cells 1 protrudes from the body portion 11 and the other electrode terminal 12 is flush with the body portion 11, the size of the gap along the second direction y is the height at which the electrode terminal 12 of the one battery cell 1 protrudes from the body portion 11.

For example, for a battery cell 1 in which an electrode terminal 12 is disposed at only one end of the body portion 11 and an end wall of the body portion 11 far away from the electrode terminal 12 is used as the other electrode terminal 12, adjacent battery cells 1 may be connected in series by interconnecting the electrode terminals 12 and the end walls of the body portions 11, and at least two battery cells 1 in the battery unit 10 may be connected in series by sequentially interconnecting the electrode terminals 12 and the end walls of the body portions 11 along the second direction y. In this case, the size of the gap along the second direction y is the height at which the electrode terminal 12 of the one battery cell 1 protrudes from the body portion 11.

If the sampling member 2 is electrically connected to the electrode terminal 12 of only one battery unit 10, only voltage of the battery cells 1 in one battery unit 10 can be collected. If one sampling member 2 is electrically connected to the electrode terminals 12 of a plurality of battery units 10 simultaneously, the plurality of battery units 10 can be connected in parallel through the sampling member 2, thereby implementing the series-parallel connection of a plurality of battery cells 1 in the battery 100. The electrical signal obtained by the sampling member 2 is the potential at the electrode terminal 12 connected to the sampling member 2. The voltages at two ends of one or more battery cells 1 can be calculated by obtaining the potentials of different electrode terminals 12. To collect electrical signals, the sampling member 2 can be made of a conductive material such as metal.

The sampling portion 21 can be electrically connected to the electrode terminal 12 by snap-fitting or welding. The electrode terminal 12 can be a pole, and the sampling portion 21 can be designed as a shape matching at least part of the circumferential surface of the pole, so as to increase the contact area with the pole. For example, the pole is cylindrical, and the sampling portion 21 can be designed as a partial arc shape. The second end of the lead-out portion 22 is led out from between the adjacent battery units 10 along the first direction x. The lead-out portion 22 is configured to output the collected electrical signal to a signal output component. The signal output component is electrically connected to the second end of the lead-out portion 22 and transmits the signal to a battery management system, so as to monitor performance of the battery 100 by monitoring state parameters of the battery cells 1 in the battery 100.

The body portion 11 may be cylindrical, and there is a triangular gap between adjacent battery units 10 in the first direction x. The second end of the lead-out portion 22 is led out from between adjacent battery units 10, meaning that the second end of the lead-out portion 22 is located in the gap. In other words, in the first direction x, the second end of the lead-out portion 22 is staggered from the most protruding position of the battery cell 1 in the third direction z, the third direction z being perpendicular to the first direction x and the second direction y.

In this embodiment of this application, the second end of the lead-out portion 22 is led out from between the adjacent battery units 10, which can prevent occupation of extra space, increase the extension length of the second end of the lead-out portion 22, facilitate the electrical connection with the signal output component, and improve the reliability of the electrical connection. This allows for accurate collection of the electrical signals of the battery cells 1 and reliable monitoring of the battery cells 1 to discover abnormal situations, so as to facilitate timely control and handling, and improve the operating reliability of the battery 100. For example, in welding the second end of the lead-out portion 22 to the signal output component, the welding area can be increased, so as to prevent virtual contact or disconnection of the welding point caused by long-term vibration or impact, thus improving the welding reliability.

Moreover, this arrangement also leaves operation space for the connection between the sampling portion 21 and the electrode terminal 12, improving the reliability of the electrical connection between the sampling portion 21 and the electrode terminal 12, facilitating the assembly and optimizing the assembly effect.

In some embodiments, the lead-out portion 22 does not extend beyond an outer side surface of the battery cell 1 in a third direction z, where the third direction z is perpendicular to the first direction x and the second direction y. The second end of the lead-out portion 22 extends in a gap between adjacent battery cells 1 in the first direction x.

This embodiment can make the sampling member 2 not extend beyond the outer side surface of the battery cell 1 in the third direction z on the basis of increasing the extension length of the second end of the lead-out portion 22, so that arrangement of the adjacent battery cells 1 is not affected. This can minimize the size occupied by a sampling function related structure in the third direction z, thus improving the energy density of the battery 100.

In some embodiments, in the second direction y, the second end of the lead-out portion 22 extends along a direction leaving the electrode terminal 12.

In this embodiment, the second end of the lead-out portion 22 extends in the second direction y, that is, parallel to the side wall of the body portion 11, which is convenient for increasing the extension length of the second end of the lead-out portion 22, increasing the size of the lead-out portion 22 along the first direction x, and preventing the second end of the lead-out portion 22 from affecting the side wall of the body portion 11.

In some embodiments, in the second direction y, the second end of the lead-out portion 22 extends beyond the gap.

In this embodiment, the second end of the lead-out portion 22 extends beyond the gap, which can increase the extension length of the second end of the lead-out portion 22, facilitate the electrical connection with the signal output component, and improve the reliability of the electrical connection, so as to accurately collect the electrical signals of the battery cells 1.

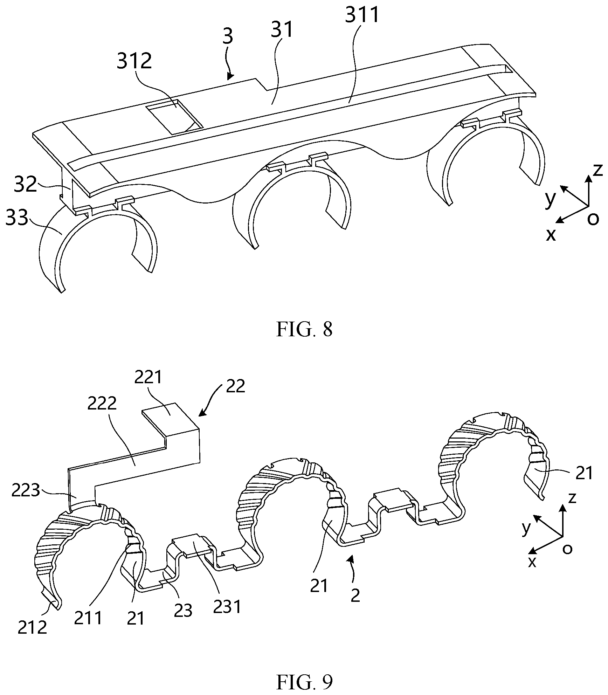

In some embodiments, as shown in FIG. 9, the first end of the lead-out portion 22 is close to the side end of the sampling portion 21 in the second direction y, and in the second direction y, the second end of the lead-out portion 22 extends along a direction leaving the sampling portion 21.

In this embodiment, the first end of the lead-out portion 22 is connected to one end of the sampling portion 21 in the second direction y, so that an operation space can be reserved for the connection between the sampling portion 21 and the electrode terminal 12. Additionally, in the second direction y, the second end of the lead-out portion 22 extends along a direction leaving the sampling portion 21, so that an extension direction of the second end of the lead-out portion 22 is independent of the operation region where the sampling portion 21 and the electrode terminal 12 are connected. This facilitates the connection between the second end of the lead-out portion 22 and the signal output component, as well as the connection between the sampling portion 21 and the electrode terminal 12, thus facilitating assembly and improving assembly performance. Moreover, in forming the sampling member 2 through a thin plate, such design is also convenient for forming the sampling member 2 by cutting and bending the whole thin plate, with no need to connect the sampling portion 21 and the lead-out portion 22 additionally, thus reducing the manufacturing difficulty of the sampling member 2.

In some embodiments, as shown in FIG. 9, the first end of the lead-out portion 22 is connected to a position of the sampling portion 21 in a center of the battery cell 1 along the first direction x, and the second end of the lead-out portion 22 extends to a position between the adjacent battery units 10 along the first direction x.

Optionally, to facilitate the connection between the first end of the lead-out portion 22 and the sampling portion 21, the lead-out portion 22 may include a connecting section 223 and an extension section 222, where a first end of the connecting section 223 is connected to the sampling portion 21 and in the third direction z, extends in a direction leaving the sampling portion 21, the first end of the connecting section 223 serves as the first end of the lead-out portion 22, and an end of the extension section 222 is connected to a second end of the connecting section 223 and extends in the first direction x. An L-shaped structure is formed between the connecting section 223 and the extension section 222, which helps improve the rigidity of the lead-out portion 22, preventing the lead-out portion 22 from being deformed after assembly and mounting.

In this embodiment, the extension length of the lead-out portion 22 along the first direction x can be designed in such a way that the second end of the lead-out portion 22 is located between adjacent battery units 10, to facilitate control of the lead-out position of the second end of the lead-out portion 22. Moreover, in order that the first end of the lead-out portion 22 is easily connected to the sampling portion 21 and that the second end of the lead-out portion 22 extends in the first direction x, the region of the lead-out portion 22 close to the sampling portion 21 can be designed to form a bending structure in a plane perpendicular to the second direction y, thus improving the rigidity of the lead-out portion 22 and preventing the lead-out portion 22 from being deformed after assembly and mounting.

In some embodiments, the sampling member 2 includes a plurality of sampling portions 21 spaced apart along the first direction x, and the adjacent sampling portions 21 are connected to each other.

The whole sampling member 2 is made of a conductive material, and the adjacent sampling portions 21 are electrically connected, thus implementing parallel connection of a plurality of battery cells 1 arranged side by side in a plurality of battery units 10. Specifically, the sampling member 2 may further include a connecting portion 23, and the connecting portion 23 is connected between the adjacent sampling portions 21 to implement electrical connection between the adjacent sampling portions 21. The sampling member 2 may simultaneously collect electrical signals from the plurality of battery cells 1 arranged in the first direction x, and the electrode terminals 12 of the plurality of battery cells 1 that are electrically connected to a plurality of sampling portions 21 of one sampling member 2 have an equal potential.

In this embodiment, the electrode terminals 12 of the plurality of battery cells 1 that are electrically connected to a plurality of sampling portions 21 of one sampling member 2 can be designed to have an equal potential, thus achieving voltage balance of the battery cells 1 and improving consistency of detection parameters of the plurality of battery cells 1.

In some embodiments, as shown in FIG. 9, the plurality of sampling portions 21 share one lead-out portion 22.

In this embodiment, the plurality of sampling portions 21 are electrically connected, and only one lead-out portion 22 is needed to implement lead-out of electrical signals, thus simplifying the structure and reducing the materials used for the sampling member 2. Moreover, for the embodiment for arranging a mounting part 3, most of the lead-out portion 22 can be integrally fastened in the mounting part 3 by injection molding and encapsulation, and the second end of the lead-out portion 22 does not need to be fastened to the mounting part 3, so there is no need to correspondingly arrange one lead-out portion 22 for each sampling portion 21, and only one lead-out portion 22 is needed for one sampling member 2.

In some embodiments, as shown in FIG. 9, the sampling portion 21 is of a partially annular structure, and the two ends of the connecting portion 23 are connected to the respective adjacent end portions of the adjacent sampling portions 21. The connecting portions 23 between each pair of adjacent sampling portions 21 are independent of each other. For example, the sampling portion 21 and the connecting portion 23 can be integrally formed by bending a strip-shaped thin plate structure.

For such structure, the first end of the lead-out portion 22 can be connected to the sampling portion 21, for example, disposed at the end portion of the sampling portion 21 in the second direction y. Alternatively, the first end of the lead-out portion 22 may be connected to the connecting portion 23, for example, disposed at the end portion of the connecting portion 23 in the second direction y.

To facilitate the connection between the sampling portion 21 and the electrode terminal 12, the partially annular structured sampling portion 21 is elastic, and the two ends of the connecting portion 23 are connected to the respective adjacent end portions of adjacent sampling portions 21, so that when the battery 100 is subjected to vibration or impact, the vibration or impact can be absorbed through the deformation of the connecting portion 23 to prevent the adjacent sampling portions 21 from being disconnected, thus improving the sampling reliability of the battery cells 1.

In some embodiments, as shown in FIG. 9, the connecting portion 23 is provided with a deformable section 231 configured to allow dislocation of the adjacent sampling portions 21.

The deformable section can be made of an elastic material, or part of the length section of the connecting portion 23 can be integrally arched up to form a deformable structure, for example, the arched shape may be C-shaped, rectangular, triangular, wavy, zigzag, or of other shapes.

In this embodiment, when the battery 100 is subjected to vibration or impact, the vibration or impact can be absorbed through the deformation of the deformable section 231, allowing for a small amount of dislocation of the adjacent sampling portions 21, preventing the adjacent sampling portions 21 from being disconnected after long-term operation, and improving the sampling reliability of the battery cells 1.

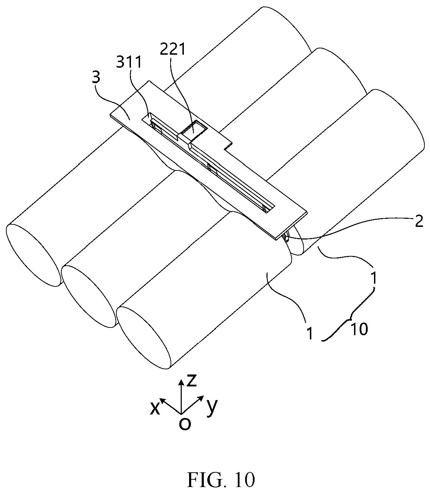

In some embodiments, as shown in FIG. 10 to FIG. 16, the sampling member 2 further includes a connecting portion 23, where the connecting portion 23 is connected between adjacent sampling portions 21, the first end of the lead-out portion 22 is connected at a position of the connecting portion 23 between adjacent battery units 10, and the second end of the lead-out portion 22 extends in the third direction z, the third direction z being perpendicular to the first direction x and the second direction y.

The first end of the lead-out portion 22 is connected to the connecting portion 23, which is equivalent to the first end of the lead-out portion 22 being connected to the sampling portion 21 through the connecting portion 23.

In this embodiment, adjacent sampling portions 21 are electrically connected through the connecting portion 23, so that the plurality of sampling portions 21 can be connected into a whole. Additionally, the first end of the lead-out portion 22 is directly connected to the position of the connecting portion 23 between the battery units 10, so that the second end of the lead-out portion 22 can reach the position between the adjacent battery units 10 when the second end of the lead-out portion 22 directly extends in the third direction z, thus simplifying the structure of the lead-out portion 22.

In some embodiments, two ends of the connecting portion 23 are respectively connected to the positions of adjacent sampling portions 21 close to the lead-out portion 22 in the third direction z. The connecting portions 23 between each pair of adjacent sampling portions 21 can be connected into a whole, for example, the connecting portion 23 includes a strip structure extending between the sampling portions 21 at two ends in the first direction x.

The connecting portion 23 may be disposed at a side end of the sampling portion 21 in the second direction y and extend in a plane perpendicular to the second direction y, so as to prevent the connecting portion 23 from occupying the operation space for connecting the sampling portion 21 and the electrode terminal 12. The first end of the lead-out portion 22 can be connected to the connecting portion 23.

This embodiment is beneficial to ensure the relative positions of the sampling portions 21, so that the sampling portions 21 are aligned with the electrode terminals 12 for connection, preventing the electrode terminals 12 from being subjected to lateral pulling force during mounting of the sampling portions 21. Moreover, for the structure for arranging the mounting part 3 subsequently, the connecting portion 23 can be encapsulated and molded in the mounting part 3 to implement more reliable fixation between the sampling member 2 and the mounting part 3, so as to reduce the acting force on the lead-out portion 22. In addition, this structure can also reduce the overall length of the lead-out portion 22, which is beneficial to improve the rigidity of the lead-out portion 22 and prevent the lead-out portion 22 from being deformed.

In some embodiments, the battery 100 further includes a mounting part 3 mounted on the battery cell 1 and connected to the sampling member 2. An accommodating groove 312 is provided on the mouting part 3 and is configured to accommodate the second end of the lead-out portion 22, and the accommodating groove 312 is provided on a surface of the mounting part 3 far away from the battery unit 10 in the third direction z and is located at a position between adjacent battery units 10 in the first direction x; where the third direction z is perpendicular to the first direction x and the second direction y.

The mounting part 3 may include a first portion 31 and a second portion 32. The first portion 31 may include a mounting plate 31A and a positioning portion 31B. The mounting plate 31A may be substantially a rectangular plate structure, and two ends of the mounting plate 31A in the second direction y may be overlapped on the battery cells 1. The positioning portion 31B may be connected to a side of the mounting plate 31A close to the battery cell 1 in the third direction z. For example, the positioning portion 31B may have an arc outer contour, is located between adjacent battery cells 1 in the first direction x, and used for mounting and positioning through the body portion 11. The joint between the positioning portion 31B and the mounting plate 31A may be transitioned via a fillet. The second portion 32 may be of a rectangular structure, and the second portion 32 is connected to a side surface of the first portion 31 close to the battery cell 1, and is located in the gap in the second direction y. The lead-out portion 22 or the connecting portion 23 may be fastened in the second portion 32 by injection molding and encapsulation to improve the insulation performance. In this way, the mounting plate 31A and the second portion 32 form a T-shaped structure, and the positioning portion 31B can be located on one or two sides of the second portion 32 in the second direction y.

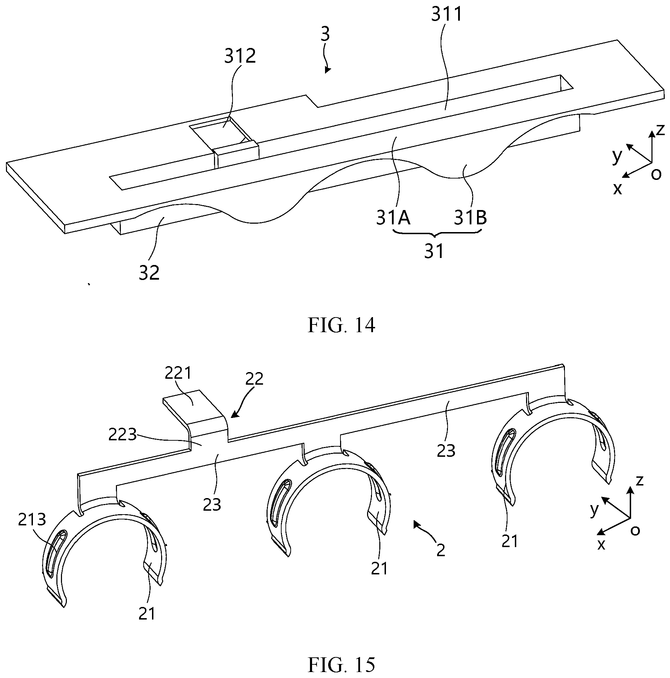

The lead-out portion 22 further includes a bending section 221, and the bending section 221 extends in a plane perpendicular to the third direction z, so as to apply pressure along the third direction z to connect the signal output component to the bending section 221, for example, by welding or riveting. For example, as shown in FIG. 9, the bending section 221 is connected to a second end of the extension section 222. As shown in FIG. 10, if the extension length of the second end of the lead-out portion 22 exceeds the gap in the second direction y, width of the mounting plate 31A provided with the accommodating groove 312 can be extended in the second direction y, so that the accommodating groove 312 is formed as a groove with closed periphery, improving the protection effect on the second end of the lead-out portion 22. Alternatively, as shown in FIG. 15, the bending section 221 is connected to the connecting portion 23 through the connecting section 223. For example, the bending section 221 may be of a rectangular structure, and correspondingly, the accommodating groove 312 may also be of a rectangular structure.

In this embodiment, the mounting part 3 is provided to facilitate the connection of the sampling member 2 and position the sampling member 2 relative to the battery cell 1, thus ensuring the position accuracy of the mounted sampling member 2 and preventing the sampling member 2 from shaking. Moreover, the accommodating groove 312 is provided on the mounting part 3 to accommodate the second end of the lead-out portion 22, which can protect the second end of the lead-out portion 22, prevent the second end of the lead-out portion 22 from being deformed due to collision during assembly, and ensure the insulation of the second end of the lead-out portion 22.

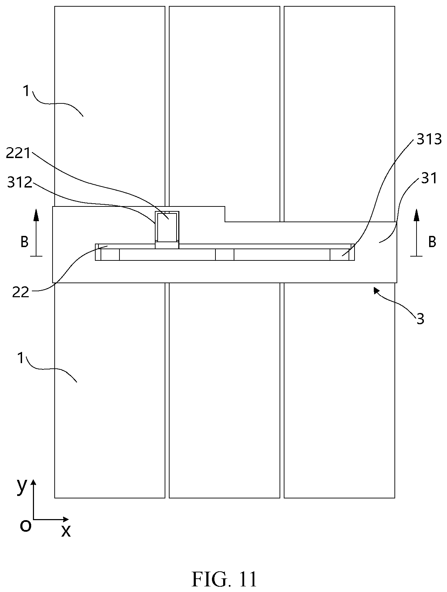

In some embodiments, as shown in FIG. 10 and FIG. 11, the mounting part 3 is provided with an opening 313, the opening 313 is disposed opposite the electrode terminal 12 in the first direction x, and the opening 313 is configured to form a channel for connecting the sampling portion 21 and the electrode terminal 12.

The number of the openings 313 is the same as that of the battery cells 1 connected to the sampling member 2. When the sampling member 2 is connected to a plurality of battery cells 1, a plurality of openings 313 are spaced apart along the first direction x, and the accommodating groove 312 can be located between adjacent openings 313 in the first direction x. During the assembly process, the sampling portion 21 and the electrode terminal 12 can be connected through the opening 313, for example, by laser welding. The opening 313 may be rectangular or of other shapes. Optionally, a groove 311 extending in the first direction x is disposed on a surface of the mounting part 3 far away from the battery cell 1 in the third direction z, and the opening 313 may be disposed on a bottom wall of the groove 311. Such structure can reduce the depth of the opening 313, facilitating laser welding and guaranteeing the welding effect.

In this embodiment, the opening 313 is provided on the mounting part 3 to provide an operation space for connecting the sampling portion 21 and the electrode terminal 12, which facilitates assembly of the sampling member 2 and improves the connection reliability between the sampling portion 21 and the electrode terminal 12. Moreover, the accommodating groove 312 is located on one side of the opening 313 in the second direction y, so that the operation space for connecting the sampling portion 21 and the electrode terminal 12 is spatially independent of the second end of the lead-out portion 22, thus facilitating assembly and improving assembly performance.

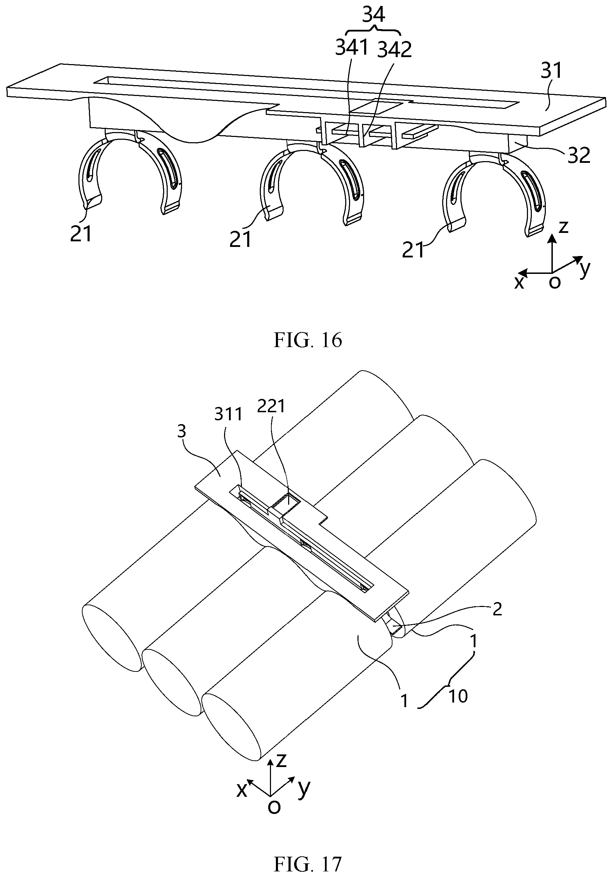

In some embodiments, as shown in FIG. 16, the mounting part 3 has a supporting portion 34 configured to support the second end of the lead-out portion 22.

The supporting portion 34 may be provided on a side surface of the mounting plate 31A close to the battery cell 1. For example, the supporting portion 34 includes a first plate 341 and a plurality of second plates 342, the first plate 341 may be disposed perpendicular to the third direction z, and the plurality of second plates 342 may be perpendicular to the first plate 341 and spaced apart in parallel along the first direction x.

The lead-out portion 22 may further include a bending section 221, and the bending section 221 extends in a plane perpendicular to the third direction z as the second end of the lead-out portion 22, which is equivalent to providing a flange on the second end of the lead-out portion 22. When pressure is applied along the third direction z to connect the signal output component to the bending section 221, the bending section 221 can be supported by the supporting portion 34 to prevent the mounting plate 31A of the mounting part 3 from being crushed.

In this embodiment, the second end of the lead-out portion 22 can be supported when pressure is applied in the third direction z to connect the signal output component and the second end of the lead-out portion 22, so as to prevent the mounting part 3 from being crashed, thus improving the connection reliability between the signal output component and the second end of the lead-out portion 22 and facilitating the application of pressure during assembly.

In some embodiments, the sampling portion 21 is connected to a circumferential side wall of the electrode terminal 12.

For example, the sampling portion 21 may be of a partially annular structure, match and connect to part of a circumferential side wall of the electrode terminal 12, for example, by welding or snap-fitting. Alternatively, the sampling portion 21 may surround the entire circumferential side wall of the electrode terminal 12. The sampling portion 21 may be a thin plate structure in the second direction y, or may have a preset thickness in the second direction y to increase the length for matching the electrode terminal 12. For example, it may match the electrode terminal 12 along the entire length section or part of the length section in the second direction y.

To increase strength of the sampling portion 21, a stiffener 213 may be disposed on an outer wall of the sampling portion 21. The stiffener 213 may be a protrusion disposed outside the sampling portion 21.

To facilitate placement of the electrode terminal 12 into the sampling portion 21, in a case that the sampling portion 21 is of a partially annular structure, the sampling portion 21 is provided with guide portions 212 at end portions along the circumference, and a gradually expanding structure is formed between the guide portions 212 at the two ends for guiding the electrode terminal 12.

In this embodiment, the sampling portion 21 is connected to the circumferential side wall of the electrode terminal 12, which can improve the reliability and stability of the connection and keep the contact area between the sampling portion 21 and the electrode terminal 12 stable, thus improving the accuracy of the sampling results.

In some embodiments, the electrode terminals 12 of at least one pair of adjacent battery cells 1 in the battery unit 10 are interconnected in the second direction y, and the sampling portion 21 is electrically connected to the two electrode terminals 12.

For example, the electrode terminal 12 may be of a cylindrical, rectangular columnar, or prismatic structure. When adjacent battery cells 1 are interconnected, the electrode terminals 12 are aligned, the two electrode terminals 12 may be welded together, and the sampling portion 21 may be connected to both of the two electrode terminals 12.

In this embodiment, the size of the sampling portion 21 in the second direction y can be increased, improving the connection stability between the sampling portion 21 and the electrode terminal 12. Optionally, the sampling portion 21 may be connected to only one electrode terminal 12 to avoid the welding position.

In some embodiments, as shown in the figure, the sampling portion 21 is of a partially annular structure, and the sampling portion 21 is in interference fit with the electrode terminal 12.

The sampling portion 21 can be elastic. During assembly, the sampling portion 21 can be snap-fitted onto the outer wall of the electrode terminal 12 by applying a pressing force to the sampling member 2 in the third direction z. To implement snap-fitting, the sampling portion 21 needs to be more than half a ring. The interference fit allows for a tight fit between the sampling portion 21 and the electrode terminal 12, preventing relative dislocation.

The mounting manner of this embodiment makes the sampling member 2 easy to assemble and mount, and facilitates automation, thus lowering requirements for the assembly device, improving assembly efficiency, and reducing costs.

In some embodiments, the sampling portion 21 is of a partially annular structure and is laser-welded to the electrode terminal 12.

To facilitate mounting of the sampling portion 21 on the electrode terminal 12, the sampling portion 21 can be designed to be no more than half a ring. Alternatively, the sampling portion 21 may be designed to be more than half a ring, so as to snap-fit the sampling portion 21 with the electrode terminal 12 before welding.

The mounting manner of this embodiment can lower the dimensional matching requirement between the sampling portion 21 and the electrode terminal 12, and implement sound and reliable connection between the sampling portion 21 and the electrode terminal 12, so that the resistance value is stable after connection, thus improving the accuracy and stability of the voltage signal collection results.

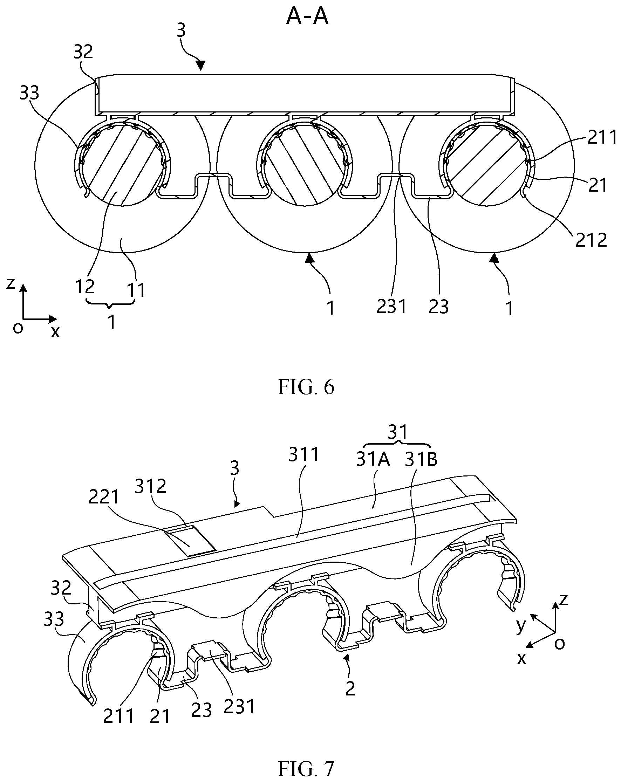

In some embodiments, as shown in FIG. 6 and FIG. 9, a protruding portion 211 is provided on an inner wall of the sampling portion 21, and the protruding portion 211 is in contact with the circumferential side wall of the electrode terminal 12.

For example, the protruding portion 211 may include a plurality of bumps, bosses, ribs, or the like provided on the inner wall of the sampling portion 21. To allow the protruding portion 211 to be formed by stamping, the sampling portion 21 has a recessed portion on the back of the protruding portion 211. The protruding portion 211 in FIG. 9 includes two groups of ribs distributed on two sides of the center line of the battery cell 1, where each group of ribs includes a plurality of ribs spaced apart, and the ribs extend along the entire width of the sampling portion 21 in the second direction y, and inclination angles of the two groups of ribs relative to the second direction y are opposite.

In this embodiment, the protruding portion 211 is provided on the inner wall of the sampling portion 21, which can increase the clamping force between the sampling portion 21 and the electrode terminal 12, and improve the connection reliability and firmness, making the signal collection results more stable.

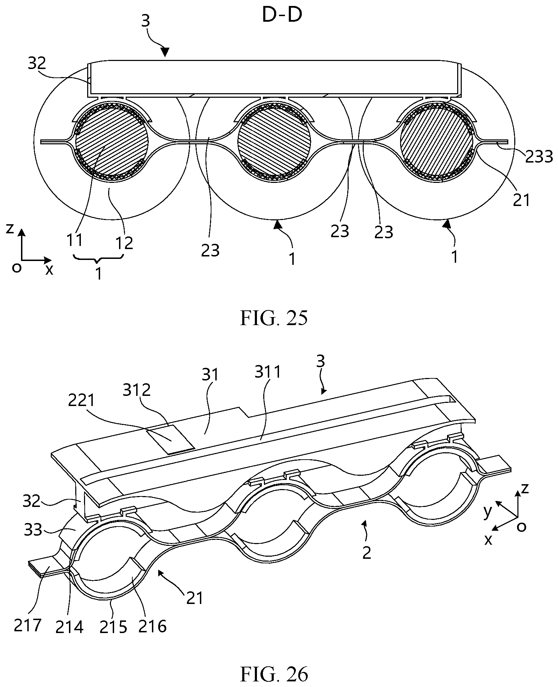

In some embodiments, as shown in FIG. 26, the sampling portion 21 includes a first snap ring 214 and a second snap ring 215, and the first snap ring 214 and the second snap ring 215 together surround the circumferential side wall of the electrode terminal 12. Both the first snap ring 214 and the second snap ring 215 may be of a semi-ring structure. The circumferential side wall of the electrode terminal 12 can be clamped by securing both sides of the first snap ring 214 and the second snap ring 215.

In this embodiment, the first snap ring 214 and the second snap ring 215 surround the entire circumferential side wall of the electrode terminal 12, so that the connection is reliable, improving the sampling accuracy.

In some embodiments, as shown in FIG. 26, the sampling member 2 further includes an elastic conductive layer 216 disposed on an inner wall of at least one of the first snap ring 214 and the second snap ring 215. For example, the first snap ring 214 and the second snap ring 215 are both provided with an elastic conductive layer 216 on the inner wall in contact with the electrode terminal 12. The elastic conductive layer 216 may be conductive foam or the like.

In this embodiment, the elastic conductive layer 216 is disposed to increase the clamping force applied by the sampling member 2 to the electrode terminal 12, prevent the electrode terminal 12 from being damaged by hard contact between the sampling member 2 and the electrode terminal 12, and lower the dimensional machining accuracy requirement on the first snap ring 214 and the second snap ring 215.

Four specific embodiments will be given below, but the structures protected by this application are not limited thereto.

In a first embodiment, as shown in FIG. 4 to FIG. 9, the battery 100 includes a mounting part 3, a sampling member 2, and a plurality of battery units 10.

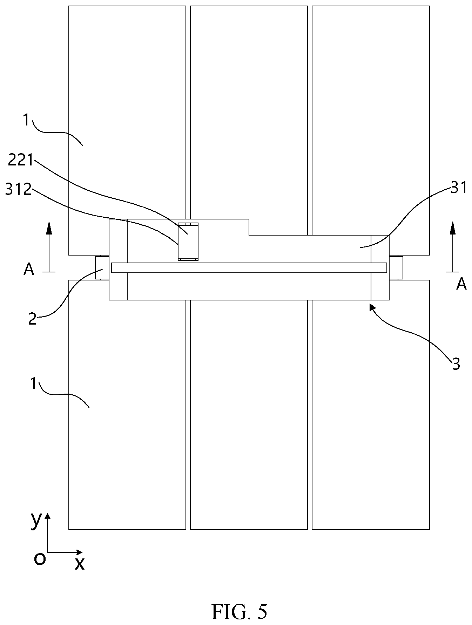

As shown in FIG. 4 and FIG. 5, a plurality of battery units 10 are arranged side by side in a first direction x, and each battery unit 10 includes at least two battery cells 1 arranged in a second direction y. For example, three battery units 10 are provided, and each battery unit 10 includes two battery cells 1. These two battery cells 1 are connected in series by interconnecting their respective electrode terminals 12, a gap is formed between body portions 11 of the two battery cells 1, and at least part of the sampling member 2 is located in the gap. The body portion 11 and the electrode terminal 12 are both cylindrical.

The mounting part 3 is mounted on the battery cell 1 and connected to the sampling member 2, and two ends of the first portion 31 of the mounting part 3 in the second direction y are respectively lapped on the battery cells 1 on two sides, so as to implement positioning and mounting through the body portions 11 of the battery cells 1. A surface of the mounting part 3 far away from the battery cell 1 in the third direction z is provided with a groove 311 and an accommodating groove 312 extending in the first direction x. Provision of the groove 311 facilitates weight reduction. The accommodating groove 312 is configured to accommodate the second end of the sampling member 2, and the accommodating groove 312 is located on one side of the groove 311 in the second direction y.

As shown in FIG. 6, the sampling member 2 includes a plurality of sampling portions 21 arranged corresponding to a plurality of electrode terminals 12 arranged along the first direction x. The sampling portions 21 may be of a partially annular structure and are clamped onto the outer side wall of the electrode terminal 12 through interference fit. The adjacent end portions of the adjacent sampling portions 21 are connected through a connecting portion 23, so that a plurality of battery cells 1 connected to a same sampling member 2 can be connected in parallel, facilitating voltage balance. The connecting portion 23 is provided with a deformable section 231. The deformable section 231 may be a rectangular protrusion formed by bending the thin plate-shaped connecting portion 23. Correspondingly, the mounting part 3 may further include a plurality of accommodating portions 33. The plurality of accommodating portions 33 are connected to a surface of the second portion 32 close to the battery cell 1, and all sampling portions 21 are embedded in one accommodating portion 33.

As shown in FIG. 7, width of part of the deformable section 231 is reduced to weaken the strength and facilitate deformation. Specifically, widths of two sides of the rectangular protrusion in the first direction x can be reduced. The sampling portion 21 may be provided with protruding portions 211, so that the sampling portion 21 can form a wavy structure. This can increase the clamping force between the sampling portion 21 and the electrode terminal 12, thus ensuring the stable connection.

As shown in FIG. 9, the sampling member 2 further includes a lead-out portion 22, a first end of the lead-out portion 22 is connected to a side end of one of the sampling portions 21 in the second direction y, for example, connected to the outermost sampling portion 21, and a second end of the lead-out portion 22 is led out from between the body portions 11 of two adjacent battery cells 1 along the first direction x.

Specifically, the lead-out portion 22 may include a connecting section 223, an extension section 222, and a bending section 221, a first end of the connecting section 223 is connected to the sampling portion 21, a first end of the extension section 222 is connected to a second end of the connecting section 223, the bending section 221 is connected to the second end of the connecting section 223, the connecting section 223 and the extension section 222 are located in a plane perpendicular to the second direction y, and the bending section 221 is bent with respect to the extension section 222 and extends in a plane perpendicular to the third direction z. The bending section 221 is configured to be electrically connected to a signal output component. For example, the signal output component may be a conductive structure such as a nickel sheet. The lead-out portion 22 is fastened in the mounting part 3 in advance by encapsulation and injection molding.

The sampling member 2 in this embodiment can be formed by cutting and bending a thin plate, which is easy to process. The protruding portion 211 on the sampling member 2 can be formed by stamping.

In this embodiment, during assembly, downward pressure is applied to the mounting part 3 so that the sampling portion 21 is snap-fitted with the electrode terminal 12. This structure features simple operation, high production efficiency, easy automation of assembly, and low cost. The sampling portion 21 needs to be elastic to realize the snap-fitting. Moreover, the sampling portion 21 is separated from the body portion 11 through the accommodating portion 33, implementing an insulating function and improving the sampling safety.

In a second embodiment, as shown in FIG. 10 to FIG. 16, the difference from the first embodiment is that the sampling portion 21 and the electrode terminal 12 are in interference fit and connected by laser welding, so that the connection is reliable and the resistance value is stable, thus lowering the material requirement of the sampling portion 21.

As shown in FIG. 10 and FIG. 11, a surface of the mounting part 3 far away from the battery cell 1 in the third direction z is provided with a groove 311. The groove 311 extends in the first direction x, and the bottom of the groove 311 is provided with a plurality of openings 313 spaced apart in the first direction x. The plurality of openings 313 are opposite the electrode terminals 12 of the plurality of battery cells 1 in the first direction x. The opening 313 forms a channel for laser-welding the sampling portion 21 and the electrode terminal 12.

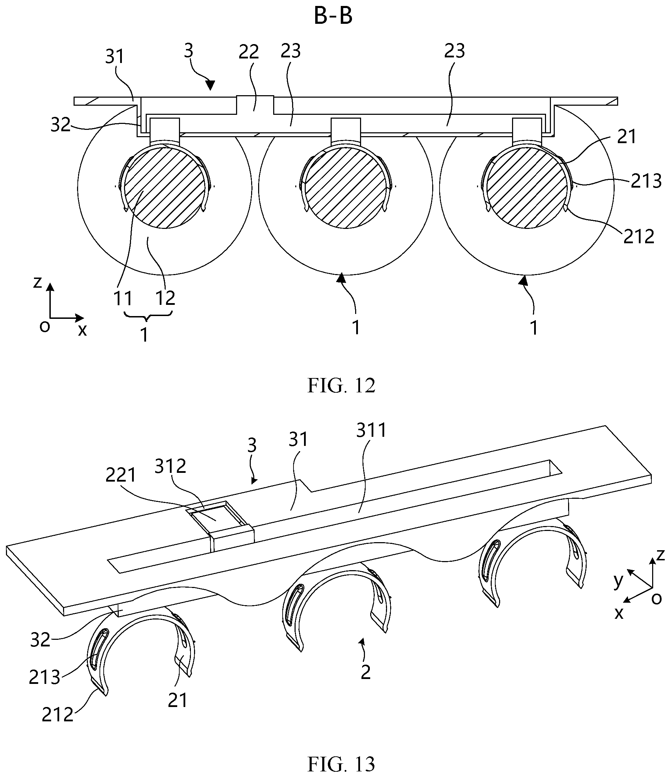

As shown in FIG. 12, the sampling member 2 further includes a lead-out portion 22 and a connecting portion 23. The lead-out portion 22 and the connecting portion 23 are fastened in the mounting part 3 by injection molding and encapsulation, so that the sampling member 2 and the mounting part 3 form an integral structure. As shown in FIG. 13, a plurality of sampling portions 21 are exposed from below the mounting part 3, and the remaining portion thereof are insulated through the mounting part 3. FIG. 14 is a schematic structural diagram of the mounting part 3. The second portion 32 of the mounting part 3 occupies the space in the gap and is configured to fasten the lead-out portion 22 and the connecting portion 23. This structure can enhance the connection between the sampling member 2 and the mounting part 3.

As shown in FIG. 15, the sampling member 2 includes a plurality of sampling portions 21, and the adjacent sampling portions 21 are connected through the connecting portion 23. Two ends of the connecting portion 23 may be respectively connected to the positions of the sampling portion 21 directly opposite the center of the battery cell 1. All the connecting portions 23 may be connected together to form an integral strip structure extending in the first direction x. The connecting portion 23 may be of a thin plate structure, located in a plane perpendicular to the second direction y, and disposed at a side end of the sampling portion 21 in the second direction y. The first end of the lead-out portion 22 is connected to the middle position of one of the connecting portions 23, so that the second end of the lead-out portion 22 is led out from between adjacent battery cells 1 along the first direction x. Specifically, the lead-out portion 22 may include a connecting section 223 and a bending section 221, one end of the connecting section 223 is connected to the middle position of the connecting portion 23, and the other end of the connecting section 223 is connected to the bending section 221 to form an L-shape. A stiffener 213 may be provided on the sampling portion 21.

As shown in FIG. 16, the mounting part 3 further includes a supporting portion 34 configured to provide a supporting force to the bending section 221 when pressure is applied to connect the signal output component to the bending section 221, so as to prevent the mounting part 3 from being crushed.

In this embodiment, during assembly, downward pressure is applied to the mounting part 3 to fasten the sampling portion 21 to the electrode terminal 12, and the contact part between the sampling portion 21 and the electrode terminal 12 is laser spot-welded through the opening 313.

In a third embodiment, as shown in FIG. 17 to FIG. 22, the difference from the second embodiment is that the sampling portion 21 and the electrode terminal 12 is connected only by laser welding. The connection is reliable and the resistance value is stable, thus lowering the material requirement of the sampling portion 21. Moreover, no interference fit is required between the sampling portion 21 and the electrode terminal 12, making the mounting easier. The sampling portion 21 does not need to be connected by snap-fitting. When the sampling portion 21 is of a partially annular structure, it can also be set to be not more than half a circle, which reduces material usage and facilitates placement of the electrode terminal 12 into the sampling portion 21.

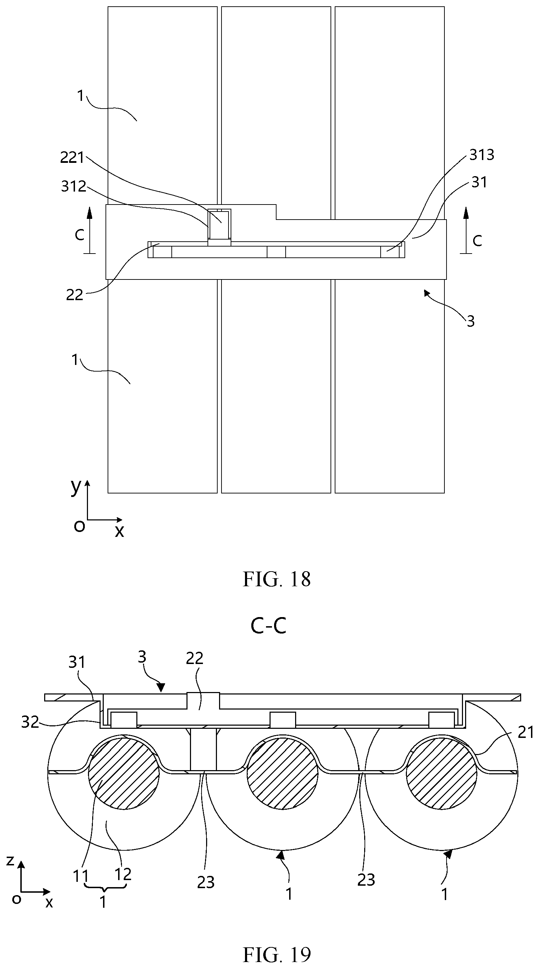

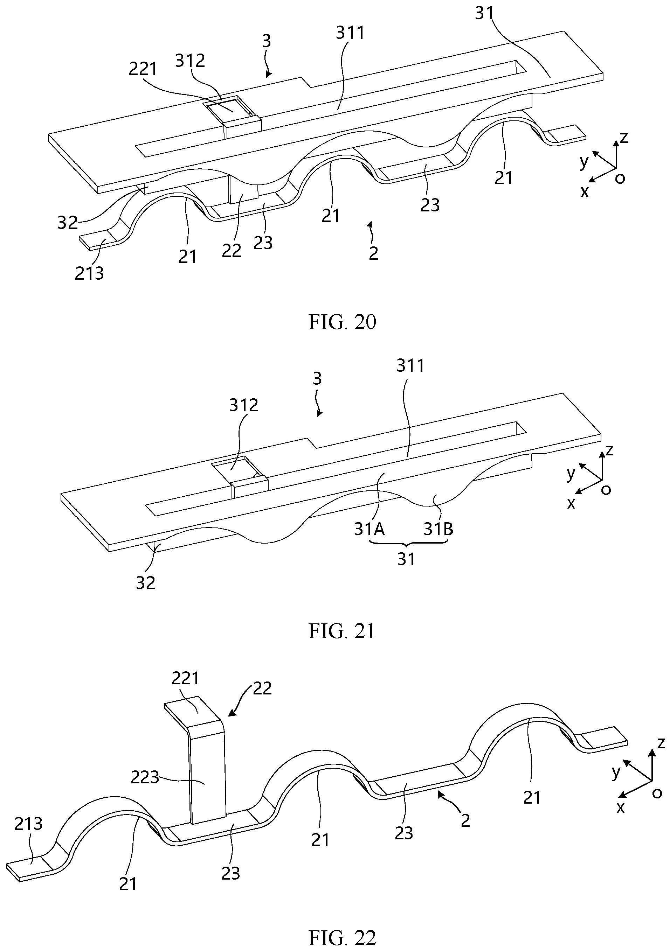

As shown in FIG. 17 and FIG. 18, to realize laser welding, the mounting part 3 is also provided with an opening 313. As shown in FIG. 19, part of the length section of the lead-out portion 22 is fastened in the mounting part 3 by injection molding and encapsulation, so that the sampling member 2 is integrally fastened to the mounting part 3. The adjacent end portions of adjacent sampling portions 21 are connected through the connecting portion 23, and outer ends of the sampling portions 21 located at two sides can also be provided with extension portions. FIG. 20 is a schematic structural diagram showing how the mounting part 3 insulates part of the length section of the lead-out portion 22. A plurality of sampling portions 21 are suspended from the mounting part 3.

FIG. 21 is a schematic structural diagram of the mounting part 3, and FIG. 22 is a schematic structural diagram of the sampling member 2. The first end of the lead-out portion 22 is connected to the middle position of one of the connecting portions 23, so that the second end of the lead-out portion 22 is led out from between adjacent battery cells 1 along the first direction x. Specifically, the lead-out portion 22 may include a connecting section 223 and a bending section 221, one end of the connecting section 223 is connected to the middle position of the connecting portion 23, and the other end of the connecting section 223 is connected to the bending section 221 to form an L-shape.

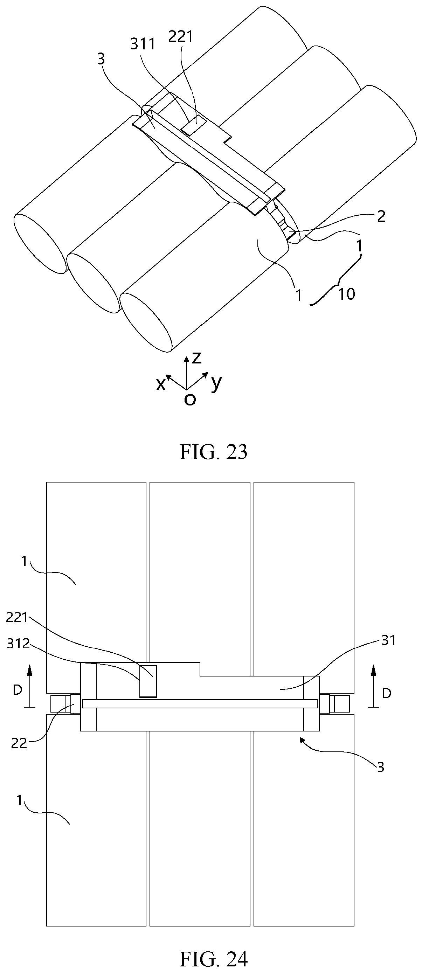

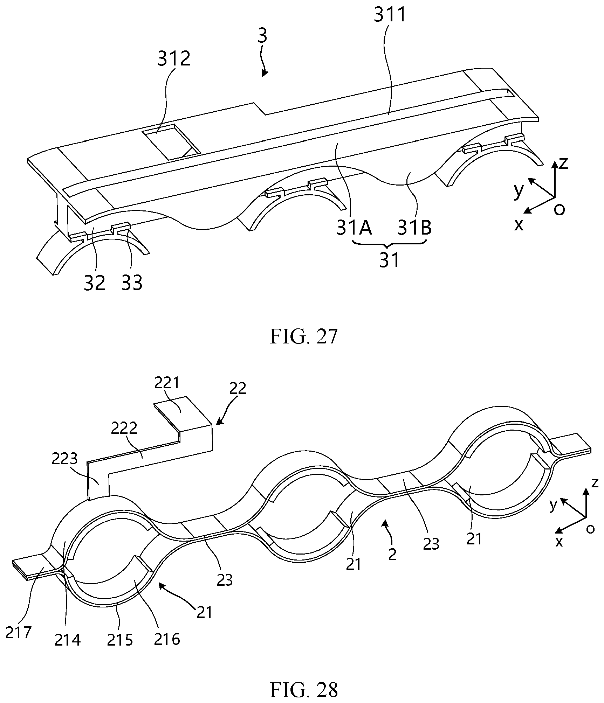

In a fourth embodiment, as shown in FIG. 23 to FIG. 28, the difference from the first embodiment is that the sampling portion 21 includes a first snap ring 214 and a second snap ring 215, where the first snap ring 214 and the second snap ring 215 together surround the circumferential side wall of the electrode terminal 12. Both the first snap ring 214 and the second snap ring 215 may be of a semi-ring structure. In a case that a plurality of sampling portions 21 are provided, the adjacent end portions of the adjacent first snap rings 214 are connected through the connecting portion 23, and the adjacent end portions of the second snap rings 215 are also connected through the connecting portion 23. Further, fastening portions 217 are provided on the outer sides of the first snap ring 214 and the second snap ring 215 that are located at two ends. The first snap ring 214 and the second snap ring 215 can be fastened through respective connecting portions 23 and fastening portions 217, for example, by laser welding or fastener connection.

As shown in FIG. 26, the sampling member 2 further includes an elastic conductive layer 216 disposed on an inner wall of at least one of the first snap ring 214 and the second snap ring 215. For example, the elastic conductive layer 216 may be conductive foam or the like, and may be integrated on the first snap ring 214 and the second snap ring 215 in advance. When the first snap ring 214 and the second snap ring 215 are fastened, the elastic conductive layer 216 is compressed against the surface of the electrode terminal 12.

In this embodiment, the parts are simple to form, and a reliable and stable connection can be formed between the sampling portion 21 and the electrode terminal 12, thus improving the accuracy of signal collection.

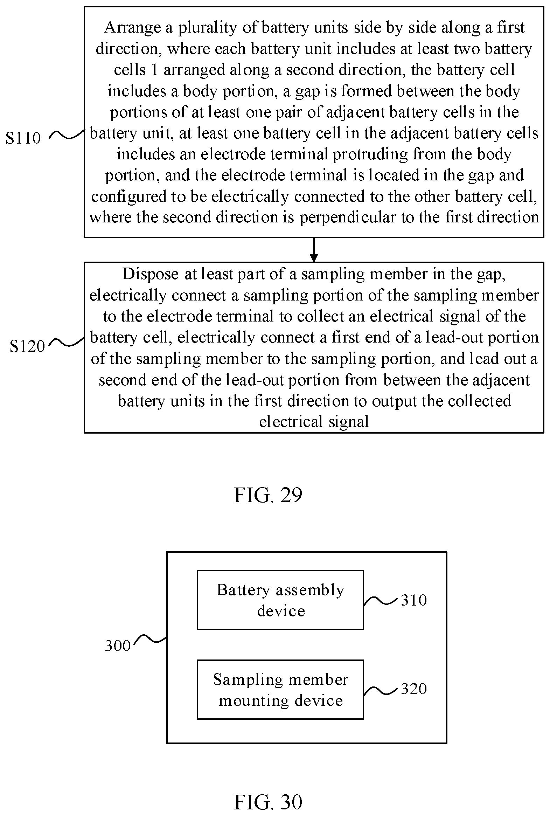

This disclosure provides a manufacturing method of the battery 100. In some embodiments, as shown in FIG. 29, the manufacturing method includes the following steps.

S110. Arrange a plurality of battery units 10 side by side along a first direction x, where each battery unit 10 includes at least two battery cells 1 arranged along a second direction y, the battery cell 1 includes a body portion 11, a gap is formed between the body portions 11 of at least one pair of adjacent battery cells 1 in the battery unit 10, at least one battery cell 1 in the adjacent battery cells 1 includes an electrode terminal 12 protruding from the body portion 11, and the electrode terminal 12 is located in the gap and configured to be electrically connected to the other battery cell 1; where the second direction y is perpendicular to the first direction x.

S120. Dispose at least part of a sampling member 2 in the gap, electrically connect a sampling portion 21 of the sampling member 2 to the electrode terminal 12 to collect an electrical signal of the battery cell 1, electrically connect a first end of a lead-out portion 22 of the sampling member 2 to the sampling portion 21, and lead out a second end of the lead-out portion 22 from between the adjacent battery units 10 in the first direction x to output the collected electrical signal.

In this embodiment of this application, the second end of the lead-out portion 22 is led out from between the adjacent battery units 10, which can prevent occupation of extra space, increase the extension length of the second end of the lead-out portion 22, facilitate the electrical connection with the signal output component, and improve the reliability of the electrical connection. This allows for accurate collection of the electrical signals of the battery cells 1 and reliable monitoring of the battery cells 1 to discover abnormal situations, so as to facilitate timely control and handling, and improve the operating reliability of the battery 100. For example, when welding the second end of the lead-out portion 22 to the signal output component, the welding area can be increased, so as to prevent virtual contact or disconnection of the welding point caused by long-term vibration or impact, thus improving the welding reliability.

Moreover, this arrangement also leaves operation space for the connection between the sampling portion 21 and the electrode terminal 12, improving the reliability of the electrical connection between the sampling portion 21 and the electrode terminal 12, facilitating the assembly and optimizing the assembly effect.

Finally, this disclosure provides a manufacturing apparatus 300 of the battery 100. In some embodiments, the manufacturing apparatus 300 includes:
a battery assembly device 310, configured to arrange a plurality of battery units 10 side by side along a first direction x, where each battery unit 10 includes at least two battery cells 1 arranged along a second direction y, the battery cell 1 includes a body portion 11, a gap is formed between the body portions 11 of at least one pair of adjacent battery cells 1 in the battery unit 10, at least one battery cell 1 in the adjacent battery cells 1 includes an electrode terminal 12 protruding from the body portion 11, and the electrode terminal 12 is located in the gap and configured to be electrically connected to the other battery cell 1; where the second direction y is perpendicular to the first direction x; and
a sampling member mounting device 320, configured to dispose at least part of a sampling member 2 in the gap, electrically connect a sampling portion 21 of the sampling member 2 to the electrode terminal 12 to collect an electrical signal of the battery cell 1, electrically connect a first end of a lead-out portion 22 of the sampling member 2 to the sampling portion 21, and lead out a second end of the lead-out portion 22 from between the adjacent battery units 10 in the first direction x to output the collected electrical signal.

Although this application has been described with reference to some preferred embodiments, various modifications to this application and replacements of the components therein can be made without departing from the scope of the appended claims. This application is not limited to the specific embodiments disclosed in this specification but includes all technical solutions falling within the scope of the claims.

## Claims

1. A battery (100), comprising:
a plurality of battery units (10) arranged side by side along a first direction (x), wherein each battery unit (10) comprises at least two battery cells (1) arranged along a second direction (y), the battery cell (1) comprises a body portion (11), a gap is formed between the body portions (11) of at least one pair of adjacent battery cells (1) in the battery unit (10), at least one battery cell (1) in the adjacent battery cells (1) comprises an electrode terminal (12) protruding from the body portion (11), and the electrode terminal (12) is located in the gap and configured to be electrically connected to the other battery cell (1); wherein the second direction (y) is perpendicular to the first direction (x); and
a sampling member (2) at least partially located in the gap, wherein the sampling member (2) comprises a sampling portion (21) and a lead-out portion (22); the sampling portion (21) is electrically connected to the electrode terminal (12) and is configured to collect an electrical signal of the battery cell (1); and a first end of the lead-out portion (22) is electrically connected to the sampling portion (21), a second end of the lead-out portion (22) is led out from between the adjacent battery units (10) along the first direction (x), and the lead-out portion (22) is configured to output the collected electrical signal, **characterised in that** the sampling member (2) comprises a plurality of sampling portions (21) spaced apart along the first direction (x), and the adjacent sampling portions (21) are connected to each other, and **in that** the sampling member (2) further comprises a connecting portion (23), the connecting portion (23) is connected between the adjacent sampling portions (21), the first end of the lead-out portion (22) is connected at a position of the connecting portion (23) between the adjacent battery units (10), and the second end of the lead-out portion (22) extends along the third direction (z), the third direction (z) being perpendicular to the first direction (x) and the second direction (y).

2. The battery (100) according to claim 1, wherein the lead-out portion (22) does not extend beyond an outer side surface of the battery cell (1) in a third direction (z), wherein the third direction (z) is perpendicular to the first direction (x) and the second direction (y).

3. The battery (100) according to claim 1 or 2, wherein in the second direction (y), the second end of the lead-out portion (22) extends along a direction leaving the electrode terminal (12); and/or
wherein in the second direction (y), the second end of the lead-out portion (22) extends beyond the gap.

4. The battery (100) according to any one of claims 1 to 3, wherein the first end of the lead-out portion (22) is close to a side end of the sampling portion (21) in the second direction (y), and in the second direction (y), the second end of the lead-out portion (22) extends along a direction leaving the sampling portion (21); and/or
wherein the first end of the lead-out portion (22) is connected to a position of the sampling portion (21) in a center of the battery cell (1) along the first direction (x), and the second end of the lead-out portion (22) extends to a position between the adjacent battery units (10) along the first direction (x).

5. The battery (100) according to claim 1, wherein the plurality of sampling portions (21) share one lead-out portion (22).

6. The battery (100) according to claim 1, wherein
two ends of the connecting portion (23) are respectively connected to positions of the adjacent sampling portions (21) close to the lead-out portion (22) in the third direction (z); or
the sampling portion (21) is of a partially annular structure, and two ends of the connecting portion (23) are connected to the respective adjacent end portions of the adjacent sampling portions (21).

7. The battery (100) according to claim 1 or 6, wherein the connecting portion (23) is provided with a deformable section (231) configured to allow dislocation between the adjacent sampling portions (21).

8. The battery (100) according to any one of claims 1 to 7, further comprising: a mounting part (3) mounted on the battery cell (1) and connected to the sampling member (2), wherein an accommodating groove (312) is provided on the mounting part (3) and is configured to accommodate the second end of the lead-out portion (22), and the accommodating groove (312) is provided on a surface of the mounting part (3) far away from the battery unit (10) in the third direction (z), and is located at a position between the adjacent battery units (10) in the first direction (x); wherein the third direction (z) is perpendicular to the first direction (x) and the second direction (y).

9. The battery (100) according to claim 8, wherein the mounting part (3) is provided with an opening (313), the opening (313) is disposed opposite the electrode terminal (12) in the first direction (x), and the opening (313) is configured to form a channel for connecting the sampling portion (21) and the electrode terminal (12); and/or wherein the mounting part (3) has a supporting portion (34) configured to support the second end of the lead-out portion (22).

10. The battery (100) according to any one of claims 1 to 9, wherein the sampling portion (21) is connected to a circumferential side wall of the electrode terminal (12); and/or
wherein the sampling portion (21) is of a partially annular structure, and the sampling portion (21) is in interference fit with the electrode terminal (12); and/or
wherein the sampling portion (21) is of a partially annular structure and is laser-welded to the electrode terminal (12); and/or
wherein the sampling portion (21) comprises a first snap ring (214) and a second snap ring (215), and the first snap ring (214) and the second snap ring (215) together surround the circumferential side wall of the electrode terminal (12) and, optionally, wherein the sampling member (2) further comprises an elastic conductive layer (216) disposed on an inner wall of at least one of the first snap ring (214) and the second snap ring (215).

11. The battery (100) according to any one of claims 1 to 10, wherein the respective electrode terminals (12) of at least one pair of adjacent battery cells (1) in the battery unit (10) are interconnected in the second direction (y), and the sampling portion (21) is electrically connected to the two electrode terminals (12).

12. The battery (100) according to any one of claims 1 to 11, wherein a protruding portion (211) is provided on an inner wall of the sampling portion (21), and the protruding portion (211) is in contact with the circumferential side wall of the electrode terminal (12).

13. An electric apparatus, comprising the battery (100) according to any one of claims 1 to 12, wherein the battery (100) is configured to provide electrical energy to the electric apparatus.

## Patentansprüche

1. Batterie (100), umfassend:
eine Vielzahl von Batterieeinheiten (10), die nebeneinander entlang einer ersten Richtung (x) angeordnet sind, wobei jede Batterieeinheit (10) mindestens zwei Batteriezellen (1) umfasst, die entlang einer zweiten Richtung (y) angeordnet sind, wobei die Batteriezelle (1) einen Körperabschnitt (11) umfasst, wobei ein Spalt zwischen den Körperabschnitten (11) von mindestens einem Paar angrenzender Batteriezellen (1) in der Batterieeinheit (10) gebildet ist, mindestens eine Batteriezelle (1) in den angrenzenden Batteriezellen (1) einen Elektrodenanschluss (12) umfasst, der von dem Körperabschnitt (11) vorsteht, und der Elektrodenanschluss (12) sich in dem Spalt befindet und konfiguriert ist, um mit der anderen Batteriezelle (1) elektrisch verbunden zu werden; wobei die zweite Richtung (y) senkrecht zu der ersten Richtung (x) ist; und
ein Abtastelement (2), das sich mindestens teilweise in dem Spalt befindet, wobei das Abtastelement (2) einen Abtastabschnitt (21) und einen Herausführungsabschnitt (22) umfasst; wobei der Abtastabschnitt (21) mit dem Elektrodenanschluss (12) elektrisch verbunden ist und konfiguriert ist, um ein elektrisches Signal der Batteriezelle (1) zu sammeln; und ein erstes Ende des Herausführungsabschnitts (22) mit dem Abtastabschnitt (21) elektrisch verbunden ist, ein zweites Ende des Herausführungsabschnitts (22) zwischen den angrenzenden Batterieeinheiten (10) entlang der ersten Richtung (x) herausgeführt wird, und der Herausführungsabschnitt (22) konfiguriert ist, um das gesammelte elektrische Signal auszugeben, **dadurch gekennzeichnet, dass** das Abtastelement (2) eine Vielzahl von Abtastabschnitten (21) umfasst, die entlang der ersten Richtung (x) beabstandet sind, und die angrenzenden Abtastabschnitte (21) miteinander verbunden sind, und dass das Abtastelement (2) ferner einen Verbindungsabschnitt (23) umfasst, wobei der Verbindungsabschnitt (23) zwischen den angrenzenden Abtastabschnitten (21) verbunden ist, das erste Ende des Herausführungsabschnitts (22) an einer Position des Verbindungsabschnitts (23) zwischen den angrenzenden Batterieeinheiten (10) verbunden ist und das zweite Ende des Herausführungsabschnitts (22) sich entlang der dritten Richtung (z) erstreckt, wobei die dritte Richtung (z) senkrecht zu der ersten Richtung (x) und der zweiten Richtung (y) ist.

2. Batterie (100) nach Anspruch 1, wobei sich der Herausführungsabschnitt (22) nicht über eine Außenseitenoberfläche der Batteriezelle (1) in einer dritten Richtung (z) erstreckt, wobei die dritte Richtung (z) senkrecht zu der ersten Richtung (x) und der zweiten Richtung (y) ist.

3. Batterie (100) nach Anspruch 1 oder 2, wobei in der zweiten Richtung (y) sich das zweite Ende des Herausführungsabschnitts (22) entlang einer Richtung erstreckt, die den Elektrodenanschluss (12) verlässt; und/oder
wobei in der zweiten Richtung (y) sich das zweite Ende des Herausführungsabschnitts (22) über den Spalt hinaus erstreckt.

4. Batterie (100) nach einem der Ansprüche 1 bis 3, wobei das erste Ende des Herausführungsabschnitts (22) in der zweiten Richtung (y) nahe an einem Seitenende des Abtastabschnitts (21) liegt und in der zweiten Richtung (y) sich das zweite Ende des Herausführungsabschnitts (22) entlang einer Richtung erstreckt, die den Abtastabschnitt (21) verlässt; und/oder
wobei das erste Ende des Herausführungsabschnitts (22) mit einer Position des Abtastabschnitts (21) in einer Mitte der Batteriezelle (1) entlang der ersten Richtung (x) verbunden ist und das zweite Ende des Herausführungsabschnitts (22) sich zu einer Position zwischen den angrenzenden Batterieeinheiten (10) entlang der ersten Richtung (x) erstreckt.

5. Batterie (100) nach Anspruch 1, wobei sich die Vielzahl von Abtastabschnitten (21) einen Herausführungsabschnitt (22) teilen.

6. Batterie (100) nach Anspruch 1, wobei
zwei Enden des Verbindungsabschnitts (23) jeweils mit Positionen der angrenzenden Abtastabschnitte (21) nahe dem Herausführungsabschnitt (22) in der dritten Richtung (z) verbunden sind; oder
der Abtastabschnitt (21) eine teilweise ringförmige Struktur aufweist, und zwei Enden des Verbindungsabschnitts (23) mit den jeweiligen angrenzenden Endabschnitten der angrenzenden Abtastabschnitte (21) verbunden sind.

7. Batterie (100) nach Anspruch 1 oder 6, wobei der Verbindungsabschnitt (23) mit einem verformbaren Abschnitt (231) versehen ist, der konfiguriert ist, um eine Verschiebung zwischen den angrenzenden Abtastabschnitten (21) zu ermöglichen.

8. Batterie (100) nach einem der Ansprüche 1 bis 7, ferner umfassend: ein Montageteil (3), das an der Batteriezelle (1) montiert und mit dem Abtastelement (2) verbunden ist, wobei eine Aufnahmerille (312) an dem Montageteil (3) bereitgestellt ist und konfiguriert ist, um das zweite Ende des Herausführungsabschnitts (22) aufzunehmen, und die Aufnahmerille (312) an einer Oberfläche des Montageteils (3) bereitgestellt wird, die in der dritten Richtung (z) weit weg von der Batterieeinheit (10) ist, und sich an einer Position zwischen den angrenzenden Batterieeinheiten (10) in der ersten Richtung (x) befindet; wobei die dritte Richtung (z) senkrecht zu der ersten Richtung (x) und der zweiten Richtung (y) ist.

9. Batterie (100) nach Anspruch 8, wobei das Montageteil (3) mit einer Öffnung (313) versehen ist, die Öffnung (313) gegenüber dem Elektrodenanschluss (12) in der ersten Richtung (x) angeordnet ist und die Öffnung (313) konfiguriert ist, um einen Kanal zum Verbinden des Abtastabschnitts (21) und des Elektrodenanschlusses (12) zu bilden; und/oder wobei das Montageteil (3) einen Stützabschnitt (34) aufweist, der konfiguriert ist, um das zweite Ende des Herausführungsabschnitts (22) zu stützen.

10. Batterie (100) nach einem der Ansprüche 1 bis 9, wobei der Abtastabschnitt (21) mit einer Umfangsseitenwand des Elektrodenanschlusses (12) verbunden ist; und/oder
wobei der Abtastabschnitt (21) eine teilweise ringförmige Struktur aufweist, und der Abtastabschnitt (21) in Presspassung mit dem Elektrodenanschluss (12) ist; und/oder
wobei der Abtastabschnitt (21) eine teilweise ringförmige Struktur aufweist und mit dem Elektrodenanschluss (12) laserverschweißt ist; und/oder
wobei der Abtastabschnitt (21) einen ersten Schnappring (214) und einen zweiten Schnappring (215) umfasst, und der erste Schnappring (214) und der zweite Schnappring (215) zusammen die Umfangsseitenwand des Elektrodenanschlusses (12) umgeben, und wobei optional das Abtastelement (2) ferner eine elastische leitende Schicht (216) umfasst, die an einer Innenwand von mindestens einem von dem ersten Schnappring (214) und dem zweiten Schnappring (215) angeordnet ist.

11. Batterie (100) nach einem der Ansprüche 1 bis 10, wobei die jeweiligen Elektrodenanschlüsse (12) mindestens eines Paares angrenzender Batteriezellen (1) in der Batterieeinheit (10) in der zweiten Richtung (y) miteinander verbunden sind und der Abtastabschnitt (21) mit den beiden Elektrodenanschlüssen (12) elektrisch verbunden ist.

12. Batterie (100) nach einem der Ansprüche 1 bis 11, wobei ein vorstehender Abschnitt (211) an einer Innenwand des Abtastabschnitts (21) bereitgestellt ist und der vorstehende Abschnitt (211) in Kontakt mit der Umfangsseitenwand des Elektrodenanschlusses (12) steht.

13. Elektrische Einrichtung, umfassend die Batterie (100) nach einem der Ansprüche 1 bis 12, wobei die Batterie (100) konfiguriert ist, um elektrische Energie für die elektrische Einrichtung bereitzustellen.

## Revendications

1. Batterie (100), comprenant :
une pluralité d'unités de batterie (10) agencées côte à côte le long d'une première direction (x), chaque unité de batterie (10) comprenant au moins deux cellules de batterie (1) agencées le long d'une deuxième direction (y), la cellule de batterie (1) comprenant une partie corps (11), un espace étant ménagé entre les parties corps (11) d'au moins une paire de cellules de batterie (1) adjacentes de l'unité de batterie (10), au moins une cellule de batterie (1) des cellules de batterie (1) adjacentes comprenant une borne d'électrode (12) dépassant de la partie corps (11), et la borne d'électrode (12) étant située dans l'espace et conçue pour être électriquement raccordée à l'autre cellule de batterie (1) ; la deuxième direction (y) étant perpendiculaire à la première direction (x) ; et
un élément d'échantillonnage (2) au moins en partie situé dans l'espace, l'élément d'échantillonnage (2) comprenant une partie d'échantillonnage (21) et une partie de sortie de conducteur (22) ; la partie d'échantillonnage (21) étant électriquement raccordée à la borne d'électrode (12) et étant conçue pour collecter un signal électrique de la cellule de batterie (1) ; et une première extrémité de la partie de sortie de conducteur (22) est électriquement raccordée à la partie d'échantillonnage (21), une deuxième extrémité de la partie de sortie de conducteur (22) est conduite à l'extérieur depuis la partie entre les unités de batterie (10) adjacentes le long de la première direction (x), et la partie de sortie de conducteur (22) est conçue pour émettre le signal électrique collecté, **caractérisée en ce que** l'élément d'échantillonnage (2) comprend une pluralité de parties d'échantillonnage (21) espacées l'une de l'autre le long de la première direction (x), et les parties d'échantillonnage (21) adjacentes sont raccordées l'une à l'autre, et **en ce que** l'élément d'échantillonnage (2) comprend en outre une partie de raccordement (23), la partie de raccordement (23) est raccordée entre les parties d'échantillonnage (21) adjacentes, la première extrémité de la partie de sortie de conducteur (22) est raccordée au niveau d'une position de la partie de raccordement (23) entre les unités de batterie (10) adjacentes et la deuxième extrémité de la partie de sortie de conducteur (22) s'étend le long de la troisième direction (z), la troisième direction (z) étant perpendiculaire à la première direction (x) et à la deuxième direction (y).

2. Batterie (100) selon la revendication 1, dans laquelle la partie de sortie de conducteur (22) ne s'étend pas au-delà d'une surface latérale externe de la cellule de batterie (1) dans une troisième direction (z), la troisième direction (z) étant perpendiculaire à la première direction (x) et à la deuxième direction (y).

3. Batterie (100) selon la revendication 1 ou 2, dans laquelle dans la deuxième direction (y), la deuxième extrémité de la partie de sortie de conducteur (22) s'étend le long d'une direction qui s'éloigne de la borne d'électrode (12) ; et/ou
dans laquelle dans la deuxième direction (y), la deuxième extrémité de la partie de sortie de conducteur (22) s'étend au-delà de l'espace.

4. Batterie (100) selon l'une quelconque des revendications 1 à 3, dans laquelle la première extrémité de la partie de sortie de conducteur (22) est proche d'une extrémité latérale de la partie d'échantillonnage (21) dans la deuxième direction (y), et dans la deuxième direction (y), la deuxième extrémité de la partie de sortie de conducteur (22) s'étend le long d'une direction qui s'éloigne de la partie d'échantillonnage (21) ; et/ou
dans laquelle la première extrémité de la partie de sortie de conducteur (22) est raccordée à une position de la partie d'échantillonnage (21) d'un centre de la cellule de batterie (1) le long de la première direction (x), et la deuxième extrémité de la partie de sortie de conducteur (22) s'étend vers une position entre les unités de batterie (10) adjacentes le long de la première direction (x).

5. Batterie (100) selon la revendication 1, dans laquelle la pluralité de parties d'échantillonnage (21) partagent une partie de sortie de conducteur (22).

6. Batterie (100) selon la revendication 1, dans laquelle
deux extrémités de la partie de raccordement (23) sont respectivement raccordées à des positions des parties d'échantillonnage (21) adjacentes proches de la partie de sortie de conducteur (22) dans la troisième direction (z) ; ou
la partie d'échantillonnage (21) est d'une structure annulaire partielle, et deux extrémités de la partie de raccordement (23) sont raccordées aux parties d'extrémités adjacentes respectives des parties d'échantillonnage (21) adjacentes.

7. Batterie (100) selon les revendications 1 ou 6, dans laquelle la partie de raccordement (23) est pourvue d'une section déformable (231) conçue pour permettre une dislocation entre les parties d'échantillonnage (21) adjacentes.

8. Batterie (100) selon l'une quelconque des revendications 1 à 7, comprenant en outre : une pièce de montage (3) montée sur la cellule de batterie (1) et raccordée à l'élément d'échantillonnage (2), une rainure de réception (312) étant ménagée sur la pièce de montage (3) et étant conçue pour recevoir la deuxième extrémité de la partie de sortie de conducteur (22), et la rainure de réception (312) est fournie sur une surface de la pièce de montage (3) éloignée de l'unité de batterie (10) dans la troisième direction (z), et est située au niveau d'une position entre les unités de batterie (10) adjacentes dans la première direction (x) ; la troisième direction (z) étant perpendiculaire à la première direction (x) et à la deuxième direction (y).

9. Batterie (100) selon la revendication 8, dans laquelle la pièce de montage (3) est pourvue d'une ouverture (313), l'ouverture (313) est disposée en regard de la borne d'électrode (12) dans la première direction (x), et l'ouverture (313) est conçue pour former un canal pour le raccordement de la partie d'échantillonnage (21) et la borne d'électrode (12) ; et/ou dans laquelle la pièce de montage (3) comporte une partie de support (34) conçue pour supporter la deuxième extrémité de la partie de sortie de conducteur (22).

10. Batterie (100) selon l'une quelconque des revendications 1 à 9, dans laquelle la partie d'échantillonnage (21) est raccordée à une paroi latérale circonférentielle de la borne d'électrode (12) ; et/ou
dans laquelle la partie d'échantillonnage (21) est d'une structure annulaire partielle, et la partie d'échantillonnage (21) est en ajustement serré avec la borne d'électrode (12) ; et/ou
dans laquelle la partie d'échantillonnage (21) est d'une structure annulaire partielle et est soudée au laser à la borne d'électrode (12) ; et/ou
dans laquelle la partie d'échantillonnage (21) comprend un premier clip annulaire (214) et un deuxième clip annulaire (215), et le premier clip annulaire (214) et le deuxième clip annulaire (215) entourent ensemble la paroi latérale circonférentielle de la borne d'électrode (12) et, éventuellement, dans laquelle l'élément d'échantillonnage (2) comprend en outre une couche conductrice élastique (216) disposée sur une paroi interne d'au moins l'un du premier clip annulaire (214) et du deuxième clip annulaire (215).

11. Batterie (100) selon l'une quelconque des revendications 1 à 10, dans laquelle les bornes d'électrode (12) respective d'au moins une paire de cellules de batterie (1) adjacentes de l'unité de batterie (10) sont interconnectées dans la deuxième direction (y), et la partie d'échantillonnage (21) est électriquement raccordée aux deux bornes d'électrode (12).

12. Batterie (100) selon l'une quelconque des revendications 1 à 11, dans laquelle une partie saillante (211) est fournie sur une paroi interne de la partie d'échantillonnage (21), et la partie saillante (211) est en contact avec la paroi latérale circonférentielle de la borne d'électrode (12).

13. Appareil électrique, comprenant la batterie (100) selon l'une quelconque des revendications 1 à 12, dans lequel la batterie (100) est conçue pour fournir de l'énergie électrique à l'appareil électrique.
